(19) Europäisches Patentamt
European Patent Office
Office européen des brevets

(11) EP 1 923 435 A1

(12) **EUROPEAN PATENT APPLICATION**
published in accordance with Art. 153(4) EPC

(43) Date of publication:
**21.05.2008 Bulletin 2008/21**

(21) Application number: **06746482.6**

(22) Date of filing: **17.05.2006**

(51) Int Cl.:
***C09D 11/00*** (2006.01) ***B41J 2/01*** (2006.01)
***B41M 5/00*** (2006.01)

(86) International application number:
**PCT/JP2006/309779**

(87) International publication number:
**WO 2006/129476 (07.12.2006 Gazette 2006/49)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.06.2005 JP 2005161077**

(71) Applicant: **KONICA MINOLTA HOLDINGS, INC.**
**Tokyo 100-0005 (JP)**

(72) Inventors:
- **YAMAUCHI, Masayoshi**
**c/o Konica Minolta IJ Tech., Inc.**
**Hino-shi,**
**Tokyo 191-8511 (JP)**
- **TSUBAKI, Yoshinori,**
**c/o Konica Minolta IJ Tech., Inc.**
**Hino-shi,**
**Tokyo 191-8511 (JP)**
- **NAKAMURA, Masaki,**
**c/o Konica Minolta IJ Tech., Inc.**
**Hino-shi,**
**Tokyo 191-8511 (JP)**
- **OHKUBO, Kenichi,**
**c/o Konica Minolta IJ Tech., Inc.**
**Hino-shi,**
**Tokyo 191-8511 (JP)**
- **FURUNO, Kumiko,**
**c/o Konica Minolta IJ Tech., Inc.**
**Hino-shi,**
**Tokyo 191-8511 (JP)**

(74) Representative: **Gille Hrabal Struck Neidlein Prop Roos**
**Patentanwälte**
**Brucknerstrasse 20**
**40593 Düsseldorf (DE)**

(54) **INKJET INK, INKJET INK SET, AND INKJET RECORDING METHOD**

(57) Disclosed is an inkjet ink having printing aptitude with various recording media, excellent feathering resistance, beading resistance and bleed resistance, high adhesion to a recording medium, and high print quality. Also disclosed are an inkjet ink set and an inkjet recording method. Specifically disclosed is an inkjet ink containing at least a colorant, water and a polymer compound which has a plurality of side chains on a hydrophilic main chain and is cross-linkable between the side chains when irradiated with an active energy ray.

EP 1 923 435 A1

## Description

### TECHNICAL FIELD

The present invention relates to an inkjet ink containing a polymer that can be bonded by cross-linking when exposed to actinic energy rays, and an inkjet recording method using this ink.

### BACKGROUND OF ART

The inkjet recording method provides high-definition image recording using a comparatively simple apparatus, and is making a rapid progress in various fields. This method is employed over a wide-ranging field, and a recording medium or an ink suited for respective purposes is utilized.

In recent years, there has been a substantial improvement in the recording speed, and efforts are being made to develop a printer having the performances capable of meeting the requirements of shortrun-printing. However, to make an effective use of performances in the inkjet printer, it is necessary to utilize the paper that is designed specifically for inkjet and is capable of absorbing ink.

When recording on the coated paper or art paper of poor ink absorbency or on the plastic without any absorbency at all, there is a problem of so-called bleeding wherein different types of inks are mixed on the recording medium, and color mixing occurs. This has been an obstacle in ensuring versatility of the recording media with respect to the inkjet.

To solve this problem, a hot melt type inkjet recording method has been proposed. According to this proposal, a hot melt type ink composition made of solid wax and others in the room temperature is liquefied by heat, and is made to jet out by adding some sort of energy. Then the composition is deposited on a recording medium while being cooled and solidified, whereby recording dots are formed (for example, Patent Documents 1 and 2).

Since this ink is a solid at room temperature, it does not cause contamination when handled. Further, there is practically no evaporation of ink at the time of melting, hence, no clogging of the nozzle. Further, the ink is solidified immediately after it has been deposited on a recording medium, and is therefore characterized by the minimum color bleeding. Thus, this ink is said to provide excellent printing quality independently of paper quality. However, the image recording in such a method involves such problems as quality deterioration caused by a raised pattern of the dot, and insufficient fretting performances since the ink dot is a soft wax-like substance.

Another product having been disclosed so far includes an inkjet recording ink that is cured by exposure to actinic energy rays (Patent Document 3). A so-called non-aqueous ink containing major solvents of ketone and alcohol is also proposed (Patent Document 4), wherein a pigment is contained as an essential component and a tri-or-higher functional polyacrylate is also included as an essential polymerized material. Further, the ink using an aqueous ultraviolet polymerized monomer is also proposed (Patent Document 5).

In the aforementioned procedures, ink itself is cured by an curing component. This has permitted recording to be made on a non-absorbing recording medium, but a large quantity of curing components other than colorant is contained, and is not volatile. Thus, the recorded surface is raised by ink dots, and image quality and glossiness in particular appear awkward.

Further, the conventionally known curing components involve safety concern. Even if the problem of safety has been completely solved, there is a restriction in the range of selecting the conforming compounds. Problems remain in both material and physical properties that prohibits free designing in the conventional art.

Patent Document 1: U.S. Patent No. 4,391,369 (Specification)
Patent Document 2: U.S. Patent No. 4,484,948 (Specification)
Patent Document 3: U.S. Patent No. 4,228,438 (Specification)
Patent Document 4: Examined Japanese Patent Application Publication No. 05-64667 (Tokkohei)
Patent Document 5: Unexamined Japanese Patent Application Publication No. 07-224241 (Tokkaihei)

### DISCLOSURE OF INVENTION

### PROBLEMS TO BE SOLVED BY THE INVENTION

The object of the present invention is to solve the aforementioned problems and to provide an inkjet ink, inkjet ink set, and inkjet recording method characterized by excellent resistance against feathering, beading and bleeding, a high degree of deposition on the recording medium and superb printing quality, wherein printing on various forms of recording medium is ensured.

## MEANS TO SOLVE THE PROBLEMS

The object of the present invention can be achieved by the following structures:

1. An inkjet ink containing at least a colorant, water and a polymer having a plurality of side chains on a hydrophilic principal chain, wherein bonding by cross-linking occurs between the side chains by irradiating with actinic energy rays.
2. An ink set comprising two or more inkjet inks, wherein at least one of the inkjet inks is the inkjet ink described in the aforementioned Structure 1.
3. An inkjet recording method comprising the steps of:

    ejecting the inkjet ink of the aforementioned Structure 1 onto a recording medium;
    irradiating the ejected ink on the recording medium with actinic energy rays; and
    drying the ink after irradiation.

4. An inkjet recording method comprising the steps of:

    ejecting the ink of the ink set of the aforementioned Structure 2 onto a recording medium;
    irradiating the ejected ink on the recording medium with actinic energy rays; and
    drying the ink after irradiation.

The present invention provides an inkjet ink, inkjet ink set, and inkjet recording method characterized by excellent resistance against feathering, beading and bleeding, a high degree of deposition on the recording medium and superb printing quality, wherein printing on various forms of recording medium is ensured.

## EFFECTS OF THE INVENTION

The present invention provides an inkjet ink, inkjet ink set, and inkjet recording method characterized by excellent resistance against feathering, beading and bleeding, a high degree of deposition on the recording medium and superb printing quality, wherein printing on various forms of recording medium is ensured.

## BRIEF DESCRIPTION OF THE DRAWINGS

Fig. 1 is a schematic cross sectional view representing an example of an inkjet printer to which the inkjet recording method of the present invention is applicable;
Fig. 2 is a schematic diagram showing an enlarged view of the nozzle opening and its surrounding area of a inkjet printer, wherein a series of aspects at the time of micro-oscillation are represented;
Fig. 3 is a schematic diagram showing an example of the method of applying oscillation outside the printing range; and
Fig. 4 is a schematic diagram showing an example of the method of applying oscillation inside the printing range.

## DESCRIPTION OF SYMBOLS

1. Inkjet recording apparatus
2. Head carriage
3. Inkjet recording head
31. Ink emitting port
4. Irradiation device
5. Platen section
6. Guide member
7. Bellows structure
P. Recording medium
20. Nozzle plate
21. Nozzle opening
51. Meniscus section

## BEST MODES TO CARRY OUT THE INVENTION

The best modes to carry out the present invention are described in the followings.

The present inventors have made concentrated study efforts to achieve the aforementioned object, and have found out that, by using an inkjet ink containing at least colorant, water and polymer having a plurality of side chains on the hydrophilic principal chain wherein bonding by cross-linking occurs between the side chains by exposure to actinic energy rays, it is possible to provide an inkjet ink, inkjet ink set, and inkjet recording method characterized by excellent resistance against feathering, beading and bleeding, a high degree of deposition on the recording medium and superb printing quality, wherein printing on various forms of recording medium is ensured.

The following describes the details of the present invention:

<Inkjet ink>

In the first place, the components of the inkjet ink of the present invention (hereinafter abbreviated as "ink") will be described:

[Polymer cross-linkable upon exposure to actinic energy rays]

The inkjet ink of the present invention is characterized by containing the polymer having a plurality of side chains on the hydrophilic principal chain wherein bonding by cross-linking occurs between the side chains by exposure to actinic energy rays. This polymer is contained in the ink, and this arrangement provides an inkjet ink characterized by excellent resistance of an formed image against feathering, beading and bleeding, a high degree of deposition on the recording medium and superb printing quality, wherein printing on various forms of recording medium is ensured on a stable basis.

A high molecular compound (hereinafter referred to as "resin of the present invention" as well) that is made up of a hydrophilic backbone chain (main chain) having multiple side chains among which a cross-linking bond can be made by exposure to actinic energy rays is the compound wherein a modified group such as a photodimerization, photodecomposition, photopolymerization photomodification or photodepolymerization type is introduced into the side chain, with respect to at least one hydrophilic resin selected from a saponified substance of vinyl polyacetate, polyvinyl acetate, polyethylene oxide, polyalkylene oxide, polyvinyl pyrrolidone, polyacryl amide, polyacrylic acid, hydroxy ethyl cellulose, methyl cellulose, hydroxy propyl cellulose, derivative of the aforementioned hydrophilic resin, and a group made of these copolymers.

The saponifiable material of polyvinyl acetate is preferably used as the principal chain from the viewpoint of ease of introducing side chains therein and handling ease. The degree of polymerization is preferably in the range of 200 or more without exceeding 4000, and is more preferably in the range of 500 or more without exceeding 2000, from the viewpoint of handling ease. The modification rate of the side chain with respect to the principal chain is preferably in the range of 0.3 mol % or more without exceeding 4 mol %, and is more preferably in the range of 0.5 mol % or more without exceeding 1.5 mol % from the viewpoint of reactivity. If this is smaller than 0.3 mol %, cross-linking performance will be insufficient, with the result that the advantages of the present invention will be reduced. If it is greater than 4 mol %, the cross-linking density will be excessive, and a hard and brittle film will be produced. Thus, the film strength will be reduced.

The examples of the photodimerized modification group include a diazo group, cinnamoyl group, stilbazolium group, and stilquinolium. Introduction of these materials is preferred. An example is found in the photosensitive resin (composition) described in the Unexamined Japanese Patent Application Publication No. 60-129742 (Tokkaisho).

The photosensitive resin (composition) described in the Unexamined Japanese Patent Application Publication No. 60-129742 (Tokkaisho) is a compound formed by introducing stilbazolium in a polyvinyl alcohol structure wherein this compound can be expressed by the following general formula (1) :

General formula (1)

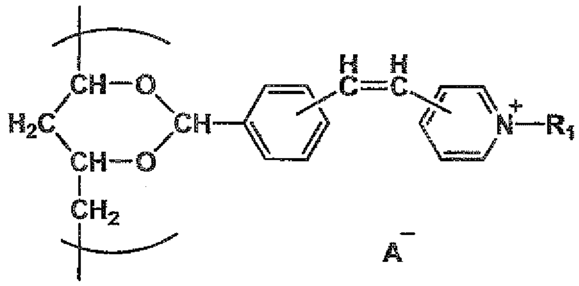

In the formula, $R_1$ is an alkyl group preferably containing 1 through 4 carbon atoms, and $A^-$ is an counter anion.

The photosensitive resin described in the Unexamined Japanese Patent Application Publication No. 56-67309 (Tokkaisho) is also preferably used. This is a resin composition formed by introducing into the polyvinyl alcohol structure the 2-diazo-5-nitrophenyl carbonyloxy ethylene structure expressed by the following general formula (2) or the 4-diazo-3-nitrophenyl carbonyloxy ethylene structure expressed by the following general formula (3).

General formula (2)

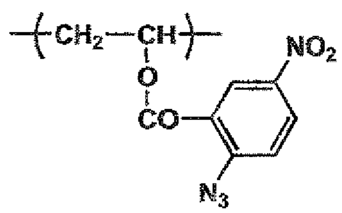

General formula (3)

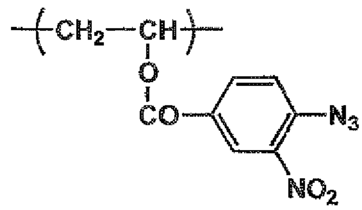

The modification group expressed by the following general formula (4) can also be used preferably.

General formula (4)

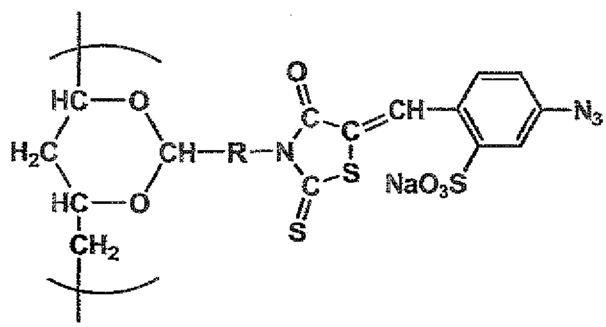

In the formula, R is an alkylene group or divalent aromatic cyclic group or preferably a benzene ring.

The resin expressed by the following general formula (5) given in the Unexamined Japanese Patent Application Publication Nos. 2000-181062 and 2004-189841 is preferably used as the photo-polymerizable modification group from the viewpoint of reactivity:

General formula (5)

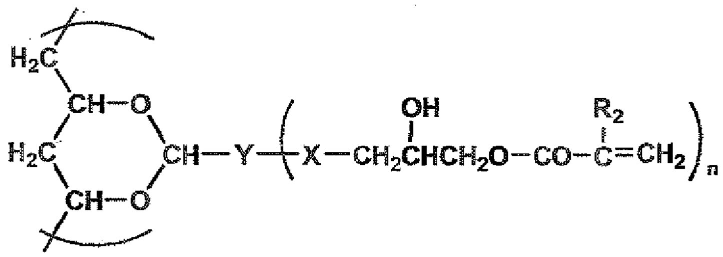

In the formula, $R_2$ is a methyl group or hydrogen atom, "n" is 1 or 2, X is - $(CH_2)_m$-COO- or -O-, Y is aromatic ring or a single bond, and "m" is an integer lying in the range of 0 through 6.

Further, the modification group expressed by the following general formula (6) of photo-polymerizable type described in the Unexamined Japanese Patent Application Publication No. 2004-161942 is also preferably used as the conventionally known hydrophilic resin.

General formula (6)

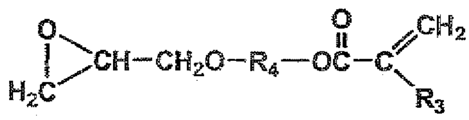

In the formula, $R_3$ denotes methyl group or hydrogen atom, and $R_4$ shows the straight chain or branched chain alkylene group containing 2 through 10 carbon atoms.

The amount of resin of the present invention preferably contained in the inkjet ink is in the range of 0.8 through 5.0 % by mass.

In the present invention, a photo-polymerizable initiator or sensitizer is preferably added. These compounds can be dissolved or dispersed in a solvent, or an be chemically bonded with a photosensitive resin.

Although there is no particular restriction to the type of the photo-polymerization initiator and sensitizer to be used, a water-soluble substance is preferably used from the viewpoint of mixing and reaction efficiency. 4-(2-hydroxy ethoxy)phenyl-(2-hydroxy-2-prolyl)ketone (HMPK), thioxanthone ammonium salt (QTX), and benzophenone ammonium salt (ABQ) are preferably used particularly from the viewpoint of the efficiency of mixing with the aqueous solvent.

Further, from the viewpoint of compatibility with the resin, 4-(2-hydroxy ethoxy)phenyl-(2-hydroxy-2-prolyl) ketone (n = 1, HMPK) expressed by the general formula (7), and the ethylene oxide adduct (n = 2 through 5) thereof are more preferably utilized.

General formula (7)

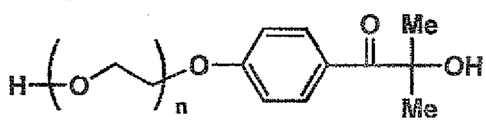

In the formula, "n" denotes an integer from 1 through 5.

Other examples are:

benzophenone related substances such as benzophenone, hydroxy benzophenone, bis-N-, N-dimethylamino benzophenone, bis-N-, N-diethylamino benzophenone, and 4-methoxy-4' dimethylamino benzophenone;

thioxanthone related substances such as thioxanthone, 2,4-diethyl thioxanthone, isopropyl thioxanthone, chloro

thioxanthone, and isopropoxy chloro thioxanthone;
anthoraquinone related substances such as ethylanthracene, benzanthracene, amino anthracene, and chloro anthracene;
acetophenone related substances;
benzoin ether related substances such as benzoin methyl ether;
2, 4, 6-trihalomethyl triazine related substances;
1-hydroxy cyclohexylphenyl ketone;
2-(o-chlorophenyl)-4, 5-diphenyl imidazole dimmer;
2-(o-chlorophenyl) -4, 5-di(methoxy phenyl) imidazole dimmer;
2-(o-fluorophenyl)-4, 5-phenyl imidazole dimmer;
2-(o-methoxyphenyl)-4, 5-phenyl imidazole dimmer;
2-(p-methoxyphenyl)-4, 5-diphenyl imidazole dimmer;
2-di(p-methoxyphenyl)-5-phenyl imidazole dimmer;
2,4,5-triaryl imidazole dimer of 2-(2, 4-dimethoxy phenyl)-4, 5-diphenyl imidazole dimer;
benzyl dimethyl ketal;
2-benzyl-2-dimethylamino-1-(4-morpholino phenyl)butane-1-one;
2-methyl-1-[4-(methylthio)phenyl]-2-morpholino-1-propanone;
2-hydroxy-2-methyl-1-phenyl-propane-1-on;
1-[4-(2-hydroxy ethoxy)-phenyl]-2-hydroxy-2-methyl-1-promape-1-on;
phenanthrene quinine;
9, 10-phenanthrene quinine;
benzoin related substances such as methylbenzoin and ethylbenzoin;
acridine derivatives such as 9-phenyl acridine and 1-7-bis(9, 9'-acridinyl)heptane;
bisacyl phosphine oxide; and
the mixture thereof. These substances can be used independently and in combination.

An accelerating agent can also be added in addition to the photo-polymerization initiator. It is exemplified by p-dimethyl amino ethyl benzoate, p-dimethyl amino isoamyl benzoate, ethanol amine, diethanol amine, and triethanol amine.

These photo-polymerization initiators are preferably grafted to the side chain instead of the above-mentioned hydrophilic backbone chain.

In the resin of the present invention which is bonded by cross-linking upon exposure to actinic energy rays, the principal chain having a certain degree of polymerization is crosslinked through bonding by cross-linking between side chains. Thus, the effect of increasing the molecular weight per photon is considerably high for the actinic energy ray cured type resin which is polymerized through the general chain reaction. In the meantime, in the conventionally known actinic energy ray cured type resin, the number of the cross-linking points cannot be placed under control. Thus, the physical properties of the film having been cured cannot be controlled, with the result that a hard and brittle film tends to be produced.

In the resin of the present invention, the number of the cross-linking points can be perfectly controlled by the length of the hydrophilic principal chain and the amount of the side chain to be introduced; thus, the physical properties of the ink film conforming to the object can be controlled. Further, almost all the conventionally known actinic energy ray cured type resin other than the colorant is made of cured components. Accordingly, the dots after curing are raised and the image quality typically represented by the glossiness is poor. By contrast, in the resin used in the present invention, the amount can be kept to a minimum required level, and much drying components are contained. Accordingly, after drying, image quality can be improved and fixing performance is also excellent.

[Colorant]

A dye and pigment can be employed as the coloring agent used in the inkjet ink in the present invention (hereinafter referred to as "colorant").

<Dye>

There is no particular restriction to the type of the dye used in the present invention. The dye is exemplified by a water-soluble dye such as an acid dye, direct dye and reactive dye, as well as a dispersed dye.

<Water-soluble dye>

The anionic water-soluble dye that can be used in the present invention is exemplified by azo dye, methine dye, azomethine dye, xanthene dye, quinone dye, phthalo cyanine dye, triphenyl methane dye, and diphenyl methane dye. The following shows the specific compounds, without the present invention being restricted thereto.
The following can be mentioned:

<C.I. Acid Yellow>

1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, 246,

<C.I. Acid Orange>

3, 7, 8, 10, 19, 24, 51, 56, 67, 74, 80, 86, 87, 88, 89, 94, 95, 107, 108, 116, 122, 127, 140, 142, 144, 149, 152, 156, 162, 166, 168,

<C.I. Acid Red>

88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415,

<C.T. Acid Violet>

17, 19, 21, 42, 43, 47, 48, 49, 54, 66, 78, 90, 97, 102, 109, 126,

<C.I. Acid Blue>

1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, 350,

<C.I. Acid Green>

9, 12, 16, 19, 20, 25, 27, 28, 40, 43, 56, 73, 81, 84, 104, 108, 109,

<C.I. Acid Brown>

2, 4, 13, 14, 19, 28, 44, 123, 224, 226, 227, 248, 282, 283, 289, 294, 297, 298, 301, 355, 357, 413,

<C.I. Acid Black>

1, 2, 3, 24, 26, 31, 50, 52, 58, 60, 63, 107, 109, 112, 119, 132, 140, 155, 172, 187, 188, 194, 207, 222,

<C.I. Direct Yellow>

8, 9, 10, 11, 12, 22, 27, 28, 39, 44, 50, 58, 79, 86, 87, 98, 105, 106, 130, 132, 137, 142, 147, 153,

<C.I. Direct Orange>

6, 26, 27, 34, 39, 40, 46, 102, 105, 107, 118,

<C.I. Direct Red>

2, 4, 9, 23, 24, 31, 54, 62, 69, 79, 80, 81, 83, 84, 89, 95, 212, 224, 225, 226, 227, 239, 242, 243, 254,

<C.I. Direct Violet>

9, 35, 51, 66, 94, 95,

<C.I. Direct Blue>

1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291,

<C.I. Direct Green>

26, 28, 59, 80, 85,

<C.I. Direct Brown>

44, 106, 115, 195, 209, 210, 222, 223,

<C.I. Direct Black>

17, 19, 22, 32, 51, 62, 108, 112, 113, 117, 118, 132, 146, 154, 159, 169,

<C.I. Basic Yellow>

1, 2, 11, 13, 15, 19, 21, 28, 29, 32, 36, 40,41, 45, 51, 63, 67, 70, 73, 91,

<C.I. Basic Orange>

2, 21, 22,

<C.I. Basic Red>

1, 2, 12, 13, 14, 15, 18, 23, 24, 27, 29, 35, 36, 39, 46, 51, 52, 69, 80, 73, 82, 109,

<C.I. Basic Violet>

1, 3, 7, 10, 11, 15, 16, 21, 27, 39,

<C.I. Basic Blue>

1, 3, 7, 9, 21, 22, 26, 41, 45, 47, 52, 54, 65, 69, 75, 77, 92, 100, 105, 117, 124, 129, 147, 151,

<C.I. Basic Green>

1, 4,

<C.I. Basic Brown>

1,

<C.I. Reactive Yellow>

2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176,

<C.I. Reactive Orange>

1, 4, 5, 7, 11, 12, 13, 15, 16, 20, 30, 35, 56, 64, 67, 69, 70, 72, 74, 82, 84, 86, 87, 91, 92, 93, 95, 107,

<C.I. Reactive Red>

2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, 235,

<C.I. Reactive Violet>

1, 2, 4, 5, 6, 22, 23, 33, 36, 38,

<C.I. Reactive Blue>

2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236,

<C.I. Reactive Green>

8, 12, 15, 19, 21,

<C.I. Reactive Brown>

2, 7, 9, 10, 11, 17, 18, 19, 21, 23, 31, 37, 43, 46,

<C.I. Reactive Black>

5, 8, 13, 14, 31, 34, 39,

<C.I. Hood Black>

1, 2,

The dye can be exemplified by the compound expressed by the following general formula (9):

General formula (8)

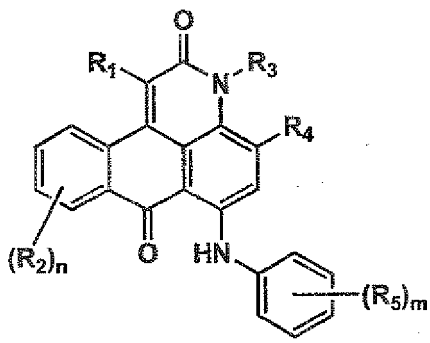

General formula (9)

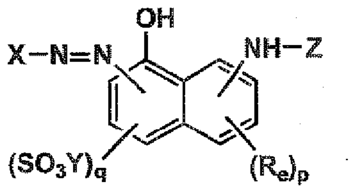

In the above general formula (8), $R_1$ is a hydrogen atom or a substituent that can be replaced. The hydrogen atom or phenylcarbonyl group is preferably used. $R_2$ can be different and denotes a hydrogen atom or a substituent that can be replaced. The hydrogen atom is preferably used. $R_3$ is a hydrogen atom or a substituent that can be replaced. The hydrogen atom or alkyl group is preferably used. $R_4$ is a hydrogen atom or a substituent that can be replaced. The hydrogen atom or aryloxyl group is preferably used. $R_5$ can be different and denotes a hydrogen atom or a substituent that can be replaced. The sulfonic acid group is preferably used. "n" denotes an integer in the range from 1 through 4, and "m" indicates an integer in the range from 1 through 5.

In the aforementioned general formula (9), X is a phenyl group or naphthyl group. It can be replaced by a substituent that can be replaced or is preferably replaced by the sulfonic acid group or carboxyl group. Y stands for a hydrogen atom, sodium ion, potassium ion, ammonium ion or alkyl ammonium ion. $R_6$ can be different and denotes a hydrogen atom or a substituent that can be replaced by naphthalene ring. "q" denotes 1 or 2. "p" indicates an integer from 1 through 4, provided that q + p = 5. Z is a substituent that can be replaced. It indicates a carbonyl group, a sulfone group or a group that can be expressed by the following general formula (10). Use of the group expressed by the following general formula (10) is preferred in particular.

General formula (10)

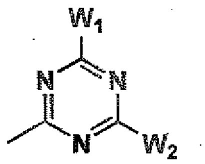

In the general formula (10), $W_1$ and $W_2$ can be different from each other. They indicate a halogen atom, amino group, hydroxyl group, alkyl amino group or aryl amino group. The halogen atom, hydroxyl group or alkyl amino group is preferred.

[C. I. Disperse dye]

Various forms of dispersant dyes can be used, as exemplified by a azo disperse dye, quinone disperse dye, anthraquinone disperse dye, and quinophthalone disperse dye. The following describes their specific examples, without the present invention being restricted thereto:

(C. I. Disperse Yellow)

3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, 232,

(C. I. Disperse Orange)

1, 3, 5, 7, 11, 13, 17, 20, 21, 25, 29, 30, 31, 32, 33, 37, 38, 42, 43, 44, 45, 47, 48, 49, 50, 53, 54, 55, 56, 57, 58, 59, 61, 66, 71, 73, 76, 78, 80, 89, 90, 91, 93, 96, 97, 119, 127, 130, 139,142,

(C. I. Disperse Red)

1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 3.59, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, 328,

(C. I. Disperse violet)

1, 4, 8, 23, 26, 27, 28, 31, 33, 35, 36, 38, 40, 43, 46, 48, 50, 51, 52, 56, 57, 59, 61, 63, 69, 77,

(C. I. Disperse Green)

9,

(C. I. Disperse Brown)

1, 2, 4, 9, 13, 19,

(C. I. Disperse Blue)

3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 333,

(C. I. Disperse Black)

1, 3, 10, 24

The aforementioned substances can be given as examples. These dyes are described in "Dye Note, Version 21" (published by Senryo Sha).

[Chelate dye and silver dye breech dye]

Further, it is possible to mention the azo dye that is used in the chelate dye and silver dye breech photosensitive material (e.g. Chibachrome by Ciba Geigie).

The chelate die is described in the U. K. Patent No. 1077484. The azo dye for K silver dye breech photosensitive material is described in the U. K. Patent Nos. 1039458, 1004957 and 1077628, and U. S. Patent No. 2612448.]

<Pigment>

A conventionally known organic or inorganic pigment can be used as the pigment that can be used in the present invention. Such a pigment can be exemplified by:

azo pigments such as azolake, insoluble azo pigment, condensed azo pigment, and chelate azo pigment;
polycyclic pigments such as phthalo cyanine pigment, perylene and perylene pigment, anthoraquinone pigment, quinacridon pigment, dioxazine pigment, thioindigo pigment, isoindoline pigment and quinophthalo pigment;
dye lakes such as basic type lake;
dye lakes such as acid dye type lake;
organic pigments such as nitro pigment, nitroso pigment, aniline black, and daylight fluorescent pigment; and
inorganic pigments such as carbon black, without the present invention being restricted thereto.

The magenta or red pigments are exemplified by C.I. pigment Red 2, C.I. pigment Red 3, C.I. pigment Red 5, C.I. pigment Red 6, C.I. pigment Red 7, C.I. pigment Red 15, C.I. pigment Red 16, C.I. pigment Red 48 : 1, C.I. pigment Red 53 : 1, C.I. pigment Red 57 : 1, C.I. pigment Red 122, C.I. pigment Red 123, C.I. pigment Red 139, C.I. pigment Red 144, C.I. pigment Red 149, C.I. pigment Red 166, C.I. pigment Red 177, C.I. pigment Red 178, and C.I. pigment Red 222.

The orange or yellow pigments are exemplified by C.I. pigment Orange 31, C.I. pigment Orange 43, C.I. pigment Yellow 12, C.I. pigment Yellow 13, C.I. pigment Yellow 14, C.I. pigment Yellow 15, C.I. pigment Yellow 17, C.I. pigment Yellow 74, C.I. pigment Yellow 93, C.I. pigment Yellow 94, C.I. pigment Yellow 128 and C.I. pigment Yellow 138.

The green or cyan pigments are exemplified by C.I. pigment Blue 15, C.I. pigment Blue 15 : 2, C.I. pigment Blue 15 : 3, C.I. pigment Blue 16, C.I. pigment Blue 60 and C.I. pigment Green 7.

Further, Carbon Black can be mentioned as the black dye.

[Self-disperse pigment]

In the inkjet ink in the present invention, a self-disperse pigment can be used as coloring agent. The self-disperse pigment refers to the pigment that can be dispersed without the aid of dispersant. The pigment particle having a polar group on the surface is preferred in particular

The pigment particle having a polar group on the surface is defined as the pigment wherein the surface of the pigment particle is directly modified by a polar group, or the organic substance having an organic pigment nucleus to which a polar group is bonded directly or through a joint (hereinafter referred to as "pigment derivative").

The polar group is exemplified by a sulfonic acid group, carboxylic acid group, phosphoric acid group, boric acid group, and hydroxyl group. The sulfonic acid group and carboxylic acid group are preferably used, and the sulfonic acid group is more preferably utilized.

In the present invention, the method of obtaining the pigment particle having a polar group on the surface is described in the leaflet of International Publication No. 97/48769, Unexamined Japanese Patent Application Publication No. 10-110129 (Tokkaihei), Unexamined Japanese Patent Application Publication No. 11-246807 (Tokkaihei), Unexamined Japanese Patent Application Publication No. 11-57458 (Tokkaihei), Unexamined Japanese Patent Application Publication No. 11-189739 (Tokkaihei), Unexamined Japanese Patent Application Publication No. 11-323232 (Tokkaihei), and Unexamined Japanese Patent Application Publication No. 2000-265094 (Tokkai), wherein a solar group such as a sulfonic acid group or its salt is introduced into at least a part of the pigment surface by oxidizing the pigment particle surface with an adequate oxidizing agent. To put it more specifically, it can be prepared by oxidizing Carbon Black by concentrated sulfuric acid or, in the case of a color pigment, by oxidizing it by sulfamic acid, sulfonated pyridine salt and amide sulfuric acid in sulfonate and N-methyl-2-pyrrolidone. The substance having become water-insoluble due to excessive oxidation in this reaction is removed, and purification is performed, whereby a pigment dispersant can be obtained. Further, when a sulfonic acid group has been introduced on the surface by oxidation, the acid group can be neutralized using a basic compound, as required.

A further example is the method wherein the pigment derivative described in the Unexamined Japanese Patent Application Publication No. 11-49974 (Tokkaihei), Unexamined Japanese Patent Application Publication No. 2000-273383 (Tokkai), and Unexamined Japanese Patent Application Publication No. 2000-303014 (Tokkai) is adsorbed onto the pigment particle surface by milling process and others. A still further example is the method wherein the pigment described in the Unexamined Japanese Patent Application Publication No. 2002-179977 (Tokkai) and Unexamined Japanese Patent Application Publication No. 2002-201401 (Tokkai), together with the pigment derivative, is dissolved in a solvent, and is then crystallized in poor solvent. Any one of these methods easily obtains a pigment particle containing a polar group on the surface.

The polar group can be either free or in the form of salt. Alternatively, it may contain a counter salt. The counter salt can be exemplified by an inorganic salt (e.g., lithium, sodium, potassium, magnesium, calcium, aluminum, nickel, ammonium) and an organic salt (e.g., triethyl ammonium, diethyl ammonium, pylidium and triethanol ammonium). The monovalent counter salt is preferably used.

The pigment can be dispersed by various types of dispersing devices such as a ball mill, sand mill, attriter, roll mill, agitator, Henschel mixer, colloid mill, ultrasonic homogenizer, pearl mill, wet type jet mil and paint shaker. Further, it is also preferred to use a centrifugal separator or filter to remove the crude particles from the pigment dispersant.

[Method of preparing a pigment dispersant]

The following describes the details of the method of preparing a pigment dispersant used in the present invention:

In the present invention, in a reactor container, a pigment is dissolved in an acid solvent or alkaline aprotic polary solvent. Then the solvent containing a polymer as required, and the pigment insoluble solvent containing the pigment derivative with a polymer and polar group as required are stirred and mixed. After that, a pigment dispersant is produced through crystallization of the pigment particle.

There is no restriction to the stirring device if the reaction container used in the present invention. An conventional impeller can be used. Its examples includes a paddle impeller, curved paddle impeller, tilted impeller, propeller impeller, turbine impeller, bulmargin impeller, ikari impeller, helical axis impeller, helical ribbon impeller, dissolver impeller, and homomixer impeller. Among others, it is preferred to use the axial flow stirring impeller capable of generating a powerful flow in the axial flow by the thrust in the direction of rotating shaft.

To ensure more uniform mixing operation in the mixing of pigment solution, a virtually turbulent flow is preferred. The turbulent flow can be defined by Reynolds number (Re). The Reynolds number can be defined by the dimensionless number, $Re = DU\rho/\eta$, wherein D is the representative length of a substance located in a flow, U is velocity, $\rho$ is density, and $\eta$ is viscosity.

Generally, a laminar flow occurs when $Re < 2300$, a transient region occurs when $2300 < Re < 3000$, and a turbulent flow occurs when $Re > 3000$. The virtually turbulent flow occurs when $Re > 3000$, preferably when $Re > 5000$, and more preferably when $Re > 10000$. In the present invention, mixing is preferably performed when the Reynolds number is 3000 or more, and is more preferably performed when the Reynolds number is 5000 or more.

The pigment solution is preferably added when the liquid flow is smooth. It is more preferably added in the liquid in the vicinity of the stirring impeller. The number of the pigment solution supply nozzle can be one, but is preferably two or more.

In the present invention, the mixing apparatus can be a dynamic mixing apparatus incorporating a stirrer or a static one without stirrer. In the static mixing apparatus, the axes of all the supply pipes and pipes for discharging the pigment having been segregated converge to one and the same point, and no stirrer is arranged in the pipe. For example, either a T-shaped or Y-shaped apparatus will do. In the dynamic and static mixing apparatuses, the number of the nozzles for introducing the pigment solution, pigment derivative solution and aqueous medium can be only one, or one for each nozzle- Further, this number can be two or more in total, or two or more for each nozzle.

There is no particular restriction to the temperature when the solution of dissolved pigment is added in the aqueous solvent wherein a pigment derivative containing a polar group is dissolved or dispersed. The preferable temperature lies in the range of 0 through 80 °C. If this temperature is below 0 °C, water in the hydrophilic solvent may be frozen. If it is over 80°C, the speed of growth of the pigment particle will be increased considerably, with the result that a desired particle diameter cannot be obtained.

In the present invention, desalination as well as crystallization is preferred.

In the present invention, desalination can be defined as the process of removing the salts, acid solvent, and alkaline aprotic polar solvent generated during or after production of the pigment dispersant in the method of producing the pigment containing a polymer and polar group, and the pigment dispersant using a pigment. The method of removing salts is exemplified by a centrifugal separation method, flotation separation method, sedimentation method, ultrafiltration method and electrodialysis method.

In the present invention, the degree of desalination is preferably 5000 μm/cm or less in terms of conductivity of the solution, more preferably 3000 μ/cm or less, and still more preferably 1000 μ/cm or less.

In the present invention, the pigment dispersant having a desired small particle diameter can be obtained by crystallization, desalination and concentration. If the result is not satisfactory, a mechanical dispersion method can be used as desired. The preferably used mechanical dispersion device includes various forms of devices such as a disper, sand mill, homogenizer, ball mill and paint shaker. The sand mill is more preferably used in the present invention.

[Pigment dispersant]

A surface active agent and polymeric dispersant can be mentioned as the pigment dispersant that can be used in the present invention.

The surface active agent is exemplified by higher fatty acid salt, alkyl sulfate, alkyl ester sulfate, alkylsulfonate, sulfosuccinate, naphthalene sulfonate, alkylphosphate, polyoxyalkylene alkylether phosphate, polyoxyalkylene alkylphenylether, polyoxyethylene polyoxypropylene glycol, glycerine ester, sorbitan ester, polyoxyethylene fatty acid amide, amineoxide, and acetylene glycol.

The following aqueous resins can be preferably used as the polymeric dispersant for the purpose of enhancing emission stability: They are styrene-acrylic acid- alkyl ester acrylate copolymer, styrene-acrylic acid copolymer, styrene-maleic acid-alkyl ester acrylate copolymer, styrene-maleic acid copolymer, styrene-methacrylic acid-alkyl ester acrylate copolymer, styrene-methacrylic acid copolymer, styrene-maleic acid half ester copolymer, vinyl naphthalene-acrylic acid copolymer, and vinyl naphthalene-maleic acid copolymer.

The amount of the aforementioned polymeric dispersant relative to the total amount of ink is preferably in the range of 0.1 through 10 % by mass, more preferably in the range of 0.3 through 5 % by mass. Two or more of these polymeric dispersants can be utilized in combination.

[Pigment particle size]

The pigment size diameter can be classified into three; a particle size by direct observation of particles with a electron microscope (primary particle size), a dispersed particle size obtained by a particle size measuring instrument using the scattering of light (secondary particle size), and a particle size converted in terms of viscosity, obtained from intrinsic viscosity.

For the purpose of improving the light fastness and dispersion stability, the primary particle size of the pigment in the ink of the present invention is preferably in the range of 10 nm or more without exceeding 1000, more preferably in the range of 10 nm or more without exceeding 70 nm. If it is smaller than 10 nm, light fastness will be poor. If it is greater than 100 nm, the head will be clogged by coagulation. To obtain the primary particle size, the longer diameters of the 1000 pigment particles are measured by a transmission electron microscope and the average value (number-average) is calculated.

[Amount of DBP oil absorbed by Carbon Black and specific surface area of nitrogen adsorption]

When the Carbon Black is used as the colorant of the inkjet ink of the present invention, the DBP oil absorption of the Carbon Black is preferably 70 $cm^3$/100 g or more, more preferably 80 $cm^3$/100 g or more.

The DBP oil absorption of the Carbon Black in the sense in which it is used here refers to the property value calculated according to the test method of JIS-K-6217 (1997).

When the Carbon Black is used as the colorant of the inkjet ink of the present invention, the specific surface area of nitrogen adsorption of the Carbon Black is preferably 100 $m^2/g$ or more, more preferably 150 $m^2/g$ or more, still more preferably 200 $m^2/g$ or more.

The aforementioned specific surface area of nitrogen adsorption can be calculated according to the test method of JIS-K-6217 (1997).

[Colorant-containing fine particle]

The colorant-containing fine particle can also be used in the present invention. The colorant-containing fine particle includes a colorant-containing polymer core and polymer shell. The polymer core mainly contains colorant, and ensures excellent color fastness and color tone. The polymer shell improves stabilization as an ink suspension of the fine particle containing the colorant. Further, it promotes fixing of the colorant on the media, avoids coagulation and enhances image quality. It also ensures excellent color fastness and color tone.

In the present invention, the colorant-containing fine particle includes a colorant-containing polymer core and polymer shell. The percentage of the colorant content (density) in the shell is preferably 0.8 or less of that of the core where the core/shell formation is not achieved. This percentage is more preferably 0.5 or less.

The percentage of the colorant content (density) can be measured by the mass analyzer such as the TOF-SIMS. When the TOF-SIMS is used, the total amount of the ion having a number of masses from 1 through 1000 is measured for the surfaces of individual fine particles. Then the percentage of colorant content can be obtained from the total amount of the ions resulting from the dye. Comparison is made between the percentages of the colorant contents of the shell, and the core where the core/shell formation is not achieved. When the TOF-SIMS is used, element analysis on the order of several nanometers can be made in the direction of depth from the surface. This arrangement permits analysis of the core/shell fine particle as in the present invention.

If the volume average particle size of the colorant-containing fine particle does not exceed 5 nm, the surface area per unit volume will be much increased. This will reduce the advantages of sealing the colorant in a core/shell polymer. The large particle having a large the volume average particle size in excess of 500 nm tends to cause clogging of the head, precipitation in the ink and poor stagnant stability. The particle size is preferably in the range of 5 nm or more without exceeding 400 nm, more preferably in the range of 10 nm or more without exceeding 300 nm.

The average particle size in terms of a circle obtained from the average value of the projection areas of the transmission electron microscope (TEM) (to be obtained for at least 100 particles or more) is converted into the value in terms of a sphere. Then the volume average particle size can be obtained. The volume average particle size and the standard deviation thereof are calculated and the standard deviation is divided by the volume average particle size, whereby the coefficient of variation can be obtained. Alternatively, the coefficient of variation can also be acquired by using the dynamic light scattering method. For example, the laser particle size analyzer system by Otsuka Denshi Kogyo Co., Ltd. and Zetacizer by Marlbarn can be used.

The coefficient of variation of the particle size is obtained by dividing the standard deviation of the particle size by the particle size. The greater this value, the more extensive is the distribution of the particle size. If the coefficient of variation of the volume average particle size is 80 % or more, the particle distribution will be very wide and the core-shell thickness will be uneven. This will tend to cause variations on the surface physical properties between particles. Variations on the surface physical properties tend to cause coagulation of the particles. This tends to result in clogging of the inkjet ink head. Further, coagulation of the particles tends to cause the colorant to scatter light on the medium, with the result that image quality will be deteriorated. The coefficient of variation is preferably 50 % or less, more preferably 30 % or less.

In the present invention, the amount of polymer used in the shell is preferably in the range of 5 % by mass or more without exceeding 95 % by mass of the total amount of polymer. If it is less than 5 % by mass, the shell thickness will be insufficient and part of the core containing much colorant tends to appear on the particle surface. Further, if the polymer of the shell is excessive, the colorant protection performance of the core will be reduced. Thus, this amount is more preferably in the range of 10 % by mass or more without exceeding 90 % by mass.

The total amount of colorant is preferably in the range of 20 % by mass or more without exceeding 1000 % by mass of the total amount of polymer. If the amount of colorant is smaller for the polymer, the image density after emission does not increase. If it is excessive, the polymer protection performance will be insufficient.

The core/shell structure in the present invention can be formed in two ways. According to one method, a polymer shell is produced after the polymer core containing colorant has been produced. Another method provides simultaneous production of the core and shell.

<Producing a shell after manufacturing fine particle core>

The colorant-containing polymer to be formed into a core can be manufactured in various ways. For example, an oil-insoluble dye is dissolved in the monomer, and is emulsified in water. After that, the dye is sealed into the dye by polymerization. Another example is the method wherein polymer and colorant are dissolved in an organic solvent and are emulsified in water, whereby the organic solvent is removed thereafter. A still another example is the method wherein porous polymer fine particles are added to a dye solution, and the dye is adsorbed onto the fine particles, whereby the dye is impregnated. The method of providing a polymer shell is exemplified by the method of water-soluble polymer dispersant is added to the aqueous suspension of the polymer to be formed into core so as to be adsorbed, the method of gradually dropping the monomer to perform simultaneous polymerization and precipitation on the surface, and the method of gradually dropping the polymer dissolved in organic solvent, whereby simultaneous segregation and adsorption onto the core surface are performed.

In another possible method, a pigment is mixed with polymer and is then dispersed in the aqueous solution, whereby a polymer coating pigment core is produced. Further, the aforementioned method is used to provide a shell.

<Simultaneous production of core and shell at the time of forming fine particles>

The polymer to be formed into a core and colorant are dissolved or dispersed in the monomer to be formed into shell after polymerization, whereby polymerization is carried out after suspension under water. According to another method, the solution is gradually dropped into the water containing an activator, micelle, whereby emulsion polymerization is carried out. The monomer can be formed into core, and the polymer can be formed into shell. Alternatively, a colorant is dissolved or dispersed in the mixture solution made up of the polymer to be formed into core after polymerization and the monomer that can be formed into shell. Then suspension polymerization or emulsion polymerization is carried out.

(Evaluation of core/shell formation)

It is important to evaluate to see if core/shell formation has been achieved or not. In the present invention, each particle size is as small as 200 nm or less. Accordingly, analysis method is restricted from the viewpoint of resolution. The TEM, TOF-SIMS and others can be used in the analysis method meeting this requirement. When the TEM is used to observe the fine particles provided with core/shell formation, dispersion is applied onto the carbon supporting film. This is dried for observation. In the image observed by the TEM, the difference in contrast may be small only by the type of the polymer as an organic substance. To evaluate to see if core/shell formation has been achieved or not, fine particles are preferably dyed by osmium tetraoxide, ruthenium tetraoxide, chlorosulfonic acid/uranyl acetate and silver sulfide. The fine particles made up of cores alone are dyed and are observed by the TEM, and the result is compared with that of the particles provided with shells. Further, the fine particles provided with shells and the fine particles provided without them are mixed, and are then dyed. Verification is made to see whether or not the percentage of the fine particles having different degree of dyeing conforms to the presence or absence of the shell.

In such a mass analyzer as the TOF-SIMS, a shell is provided on the particle surface. This arrangement makes it possible to verify that the amount of the colorant in the vicinity of the surface is reduced, as compared to the case wherein only the core is present. When the colorant contains the element not contained in the core/shell polymer, this element can be used as a probe to check if the shell containing a small amount of colorant is provided or not.

To be more specific, the TOF-SIMS is used to measure the total amount of ions having a mass number of 1 through 1000 on the surfaces of individual fine particles. Then the percentage of the colorant content (density) can be calculated from the ratio relative to the total amount of ion resulting from the element not included in the core/shell polymer contained in the dye. This method allows the percentage of colorant content (density) to be measured by comparison between the percentages of colorant contents of the shell and the core wherein the core/shell formation is not achieved. When the TOF-SIMS is used, element analysis on the order of several nanometers can be made in the direction of depth from the surface. This arrangement permits analysis of the core/shell fine particle as in the present invention.

If there is no such an element, an adequate dyeing agent can be used to check the amount of colorant content in the shell by comparison with the case wherein the shell is not provided.

The core/shell particles are embedded in the epoxy resin and extra-thin segments are prepared by a microtome. This procedure allows the core/shell formation to be observed more clearly. As described above, if the polymer or colorant includes an element what can be made into a probe, the composition of the core and shell and the amount of distribution of the colorant into the core and shell can be estimated by the TOF-SIMS and TEM.

To get the required particle size, optimization of prescription and selection of adequate emulsification method are important. Prescription varies according to the colorant and polymer to be used, Since suspension is made under water, the polymer constituting the shell is generally required to have a higher degree of hydrophilicity than the polymer

constituting the core. Further, the amount o the colorant contained in the polymer constituting the shell is preferably smaller than that of the polymer constituting the core, as described above. The colorant is preferably to have a lower degree of hydrophilicity than the polymer constituting the shell. Hydrophilicity and hydrophobicity can be measured by a solubility parameter (SP). For a solubility parameter (SP), useful reference is provided by the value and method for measurement and calculation described in the Polymer Handbook Ver. 4 (John Wiley & Sons, Inc.), P. 675.

The number average molecular weight of the polymer used in the core/shell structure is preferably in the range of 500 through 100000, more preferably in the range of 1000 through 30000 from the viewpoint of film formation after printing, durability and suspension forming performance.

Various types of polymer having different Tg's can be used as the aforementioned polymer. At least one of the polymers to be used preferably has the value Tg of 10 °C or more.

In the present invention, the conventionally known polymer can be used. The polymers used with particular preference include the polymer containing an acetal group as the major functional group, the polymer containing carbonic acid ester, the polymer containing hydroxyl group and the polymer containing ester group. The aforementioned polymer may include a substituent. This substituent may have a straight chain, branched chain or cyclic structure. Various forms of polymer having the aforementioned functional group are available on the market. They can be synthesized by the normal method. Further, these copolymers can be obtained by introducing an epoxy group into one polymer molecule which is later subjected to condensation and polymerization with other polymers. They can also be produced by graft polymerization using light or radiation.

[Colorant sealed into colorant-containing fine particles]

The following describes the colorant to be sealed by the aforementioned polymer: There is no particular restriction to the type of colorant if it can be sealed by the aforementioned polymer. The examples include oily dye, disperse dye, direct dye, acid dye and basic dye. The oily dye and disperse dye are preferably used, from the viewpoint of improving the sealability.

[Inkjet ink set]

The inkjet ink set of the present invention is made up of two or more types of inkjet ink. At least one of the inkjet inks is an inkjet ink containing the resin of the present invention; namely, it is an inkjet ink containing at least colorant, water and polymer having a plurality of side chains on the hydrophilic principal chain wherein bonding by cross-linking occurs between the side chains by exposure to actinic energy rays.

The inkjet ink set of the present invention is exemplified by the inkjet ink set having different hues. The inkjet ink set having different hues to be used in preference includes the inkjet ink set made up of yellow, magenta, cyan and black inkjet inks.

In addition to the aforementioned inks of four colors, light cyan ink, light magenta ink, dark yellow, and light black ink (gray ink) can be used. Further, it is also possible to use the so-called special inks having blue red, green, orange and violet colors.

(Inks of different density levels)

In the ink of at least one color in the inkjet ink set of the present invention, it is preferred to use the inkjet ink set made of the inks of the same color with at least two different density levels. In the inks of two or more colors, it is preferred to use the inkjet ink set made of the inks of the same color with at least two different density levels. Especially in the inks of three or more colors, it is preferred to use the inkjet ink set made of the inks of the same color with at least two different density levels.

This is because use of the inkjet ink of low density reduces a feel of graininess and creates a high-definition image free from so-called gritty feel. Especially in the magenta ink or cyan ink characterized by a high degree of human visibility, it is preferred to use at least two inks with different density levels.

The density ratio of the inkjet ink set with different density levels can take a desired value. However, to ensure smooth representation of gradation, the ratio between high-density ink and low-density ink (colorant density of the low-density ink/colorant density of the high-density ink) is preferably in the range of 0.1 through 1.0, more preferably in the range of 0.2 through 0.5, still more preferably in the range of 0.25 through 0.4.

(White ink)

In the inkjet ink set of the present invention, a white ink containing a white pigment can be used in addition to the aforementioned colored pigments. There is no particular restriction to the white pigment to be used, if it can change

the inkjet ink into a white ink. For example, an inorganic white pigment, organic white pigment and white hollow polymer fine particles can be utilized.

The inorganic white pigments are exemplified by a sulfate of alkaline earth metal such as barium, carbonate of alkaline earth metal such as calcium carbonate, silica such as pulverized silicic acid, synthesized silicate, calcium silicate, alumina, alumina hydrate, titanium oxide, zinc oxide, talc, and clay. Especially titanium oxide has a high degree of refractive index and excellent opacifying power and coloring performance in the form of fine particles. It can be preferably utilized.

The organic white pigments are exemplified by the organic compound salt shown in the Unexamined Japanese Patent Application Publication No. 11-129613 (Tokkaihei), and alkylene bismelamine derivatives disclosed in the organic compound salt shown in the Unexamined Japanese Patent Application Publication No. 11-140365 (Tokkaihei) and the organic compound salt shown in the Unexamined Japanese Patent Application Publication No. 2001-234093 (Tokkai). The specific examples of the aforementioned white pigments are found in the commercial products, Shigenox OWP, Shigenox OWPL, Shigenox FWP, Shigenox FWG, Shigenox UL and Shigenox U (by Hakkol Chemical).

The example of the white hollow polymer fine particles includes thermoplastic fine particles virtually manufactured of an organic polymer disclosed in the U. S. Patent No. 4089800.

In the present invention, the white pigment can be used independently or in combination. The pigment can be dispersed by the ball mill, sand mill, attritor, roll mill, agitator, Henschel mixer, colloid mill, ultrasonic homogenizer, pearl mill, wet type jet mil and paint shaker. Further, dispersant can be added to disperse the pigment.

The conventionally known dispersant can be used. Use of the polymeric dispersant is preferred.

The pigment is preferably dispersed in such a way that the average particle size will be in the range of 0.05 through 1.0 μm. The average particle size is more preferably in the range of 0.08 through 0.3 μm.

(Colorless ink)

In the inkjet ink set in the present invention, the colorless ink (also called the transparent ink) without virtually containing any colorant can also be used in combination.

The colorless ink without virtually containing any colorant in the sense in which it is used in the present invention can be defined to exhibit the percentage of the colorant content being 0.1 % or less, with respect to the total mass of ink. It is preferably the ink that includes no colorant at all.

The contents of the colorless ink in the present invention can be uniformly dissolved or can be present in the uneven dispersion system. What can be added includes the resin dissolved in an aqueous system, the resin dispersed in an aqueous system, the resin dissolved in an organic solvent, and the resin dispersed in an organic solvent. The resin dissolved in an aqueous system and the resin dispersed in an aqueous system are preferably used. Further, the resin of the present invention is preferably contained. It is possible to use the colorless ink prepared by eliminating the colorant alone from the inkjet ink to be used. To provide various forms of function, the following additives are preferably added:

The resin dissolved in an aqueous system that can be added is exemplified by polyvinyl alcohol, gelatin, polyethylene oxide, polyvinyl pyrrolidone, polyacrylic acid, polyacrylic amide, polyurethane, dextran, dextrin, carrageenan (κ, ι, λ), agar, Pullulan, water-insoluble polyvinyl butyral, hydroxy ethyl cellulose, and carboxymethyl cellulose.

Addition of fine particles of thermoplastic resin as the resin dispersed in an aqueous system is preferred to improve the glossiness of the image. It is possible to use the fine particles of thermoplastic resin described with reference to the thermoplastic resin that can be added to the surface layer of the recording medium, or its fine particles. It is especially preferred to use the resin that does not cause thickening or precipitation when put in the ink. The fine particles of the thermoplastic resin to be added are preferably dissolved and softened in the range of 0 through 150 °C.

<Water-soluble organic solvent>

Water-soluble organic solvent is preferably used as the inkjet ink of the present invention. The preferably used water-soluble organic solvent is exemplified by alcohols (e.g., methanol, ethanol, propanol, isopropanol, butanol, isobutanol, secondary butanol and tertiary butanol), polyvalent alcohols (e.g., ethylene glycol, diethylene glycol, triethylene glycol, polyethylene glycol, propylene glycol, dipropylene glycol, polypropylene glycol, butylene glycol, hexanediol, pentanediol, glycerine, hexane triol, and thiodiglycol), polyvalent alcohol ethers (e.g., ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monobutyl ether, ethylene glycol monomethyl ether acetate, triethylene glycol monoethyl ether, triethylene glycol monoethyl ether, triethylene glycol monobutyl ether, ethylene glycol monophenyl ether and propylene glycol monophenyl ether), amines (e.g., ethanol amine, diethanol amine, triethanol amine, N-methyl diethanol amine, N-ethyl diethanol amine, morpholine, N-ethyl morpholine, ethylene diamine, diethylene diamine, triethylene tetraamine, tetraethylene pentaamine, polyethylene imine, pentamethyl diethylene triamine, and tetramethyl propylene diamine), amides (e.g., formamide, N, N-dimethyl

formamide, and N, N-dimethyl acetoamide), heterocyclic rings (e.g., 2-pyrrolidone, N-methyl-2-pyrrolidone, cyclohexyl pyrrolidone, 2-oxazolidone, and 1,3-dimetyl-2-imidazolidinone), and sulfoxides (e.g., dimethyl sulfoxides) sulfones (e.g., sulfolane), urea, acetonitryl and acetone. The preferably used water-soluble organic solvent is exemplified by polyvalent alcohols. Further, a combined use of polyvalent alcohol and polyvalent alcohol ether is preferred in particular.

Water-soluble organic solvents can be used independently or can be used in combination. The total amount of water-soluble organic solvent to be added in ink is 5 through 70 % by mass, preferably 10 through 35 % by mass.

(Organic/inorganic ratio of water-soluble organic solvent)

In the inkjet ink of the present invention, the percentage of the water-soluble organic solvent content having an organic/inorganic ratio of 0.5 through 2.4 is preferably 5 through 15 % by mass.

The organic/inorganic ratio of water-soluble organic solvent in the sense in which it is used in the present invention is based on the definition disclosed in the "Organic Conceptual Diagram" by Yoshio Koda (Sankyo Shuppan, 1985). The method of calculation is also based on the description given in Sankyo Shuppan, 1985.

The examples of the water-soluble organic solvent used in the present invention include:

| | Organic/inorganic ratio |
|---|---|
| Glycerine | 5.0 |
| Ethylene glycol | 5.0 |
| Propylene glycol | 3.3 |
| Diethylene glycol | 2.8 |
| 1, 2-pentane diol | 2.0 |
| Dipropylene glycol | 1.8 |
| Ethylene glycol monomethylether | 2.0 |
| Ethylene glycol monoethyl ether | 1.5 |
| Diethylene glycol monomethylether | 0.9 |
| Triethylene glycol monomethylether | 0.8 |

[Other additives to inkjet ink]

In conformity to the purpose of improving the emission stability, storage stability, image keeping quality, conformance of the print head and ink cartridge, and various performances, the inkjet ink of the present invention can be provided with various forms of conventionally known additives such as viscosity regulating agent, surface tension regulating agent, specific resistance regulating agent, film forming agent, dispersant agent, surface active agent, ultraviolet absorbing agent, antioxidant agent, anti-fading additive, anti-soot agent, and rust preventive agent. The examples include polystyrene, polyacrylic acid ester, polymethacrylic acid ester, polyacrylamide, polyethylene, polypropylene, polyvinyl chloride, polyvinylidene chloride, or the copolymer thereof, organic latex such as urea resin or melamine resin, oil-drop fine particles of liquid paraffin, dioctyl phthalate, tricresyl phosphate and silicone oil, various forms of surface active agents of cation or nonion, the ultraviolet absorbing agents disclosed in the Unexamined Japanese Patent Application Publication No. 57-74193 (Tokkaisho), Unexamined Japanese Patent Application Publication No. 57-87988 (Tokkaisho) and Unexamined Japanese Patent Application Publication No. 62-261476 Tokkaisho), the anti-fading additives disclosed in the Unexamined Japanese Patent Application Publication No. 57-74192 (Tokkaisho), Unexamined Japanese Patent Application Publication No. 57-87989 (Tokkaisho),Unexamined Japanese Patent Application Publication No. 60-72785 (Tokkaisho), Unexamined Japanese Patent Application Publication No. 61-146591 (Tokkaisho), Unexamined Japanese Patent Application Publication No. 1-95091 (Tokkaihei), and Unexamined Japanese Patent Application Publication No. 3-13376 (Tokkaihei), the fluorescent whitening agents described in the Unexamined Japanese Patent Application Publication No. 59-42993 (Tokkaisho), Unexamined Japanese Patent Application Publication No. 59-52689 (Tokkaisho), Unexamined Japanese Patent Application Publication No. 62-280069 (Tokkaisho), Unexamined Japanese Patent Application Publication No. 61-242871 (Tokkaisho) and Unexamined Japanese Patent Application Publication No. 4-219266 (Takkaihei), and the pH regulating agents of sulfuric acid, phosphoric acid, citric acid, sodium hydroxide, potassium hydroxide and potassium carbonate.

(Latex)

Latex can be put in the inkjet ink of the present invention. The examples includes latexes of styrene-butadiene copolymer, polystyrene, acrylonitrile-butadiene copolymer, acrylic acid ester copolymer, polyurethane, silicon-acryl copolymer and acryl denatured fluorine resin. Latex can be made by dispersing the polymer particles by using emulsifier or by dispersing the polymer particles without using emulsifier. The surface active agent is often used as the emulsifier. The polymer having a water-soluble group such as sulfonic acid group and carboxylic acid group which (e.g., polymer with its soluble group graft-bonded, and polymer obtained from the monomer having a soluble group and monomer having insoluble portion) are also preferably utilized.

Further, use of the soluble latex is preferable for the inkjet ink of the present invention. The soluble latex refers to the latex that does not use emulsifier, and the latex wherein the polymer having a water-soluble group such as sulfonic acid group and carboxylic acid group (e.g., polymer with its soluble group graft-bonded, and polymer obtained from the monomer having a soluble group and monomer having insoluble portion) is utilized as latex

In recent years, in addition to the latex wherein the polymer particles having all uniform particles are dispersed, the latex dispersed with the polymer particles of core/share type having different compositions between the center and periphery is also available as the polymer particles of latex. The latex of this type can also be used preferably.

In the inkjet ink of the present invention, the average particle size of the polymer particle in the latex is in the range of 10 nm or more without exceeding 300 nm, preferably in the range of 10 nm or more without exceeding 100 nm. If the average particle size of the polymer particle in the latex exceeds 300 nm, the glossiness of the image will be deteriorated. If it is below 10 nm, water resistance and fretting resistance will be insufficient. The average particle size of the polymer particle in the latex can be measured by the commercially available particle size measuring instrument based on the light scattering method, electrophoresis method or laser doppler method.

In the inkjet ink of the present invention, latex is added in such a way that the amount of solid to be added will be 0.1 % by mass or more without exceeding 20 % by mass with respect to the total mass of ink. The amount of solid latex to be added is preferably kept in the range of 0.5 % by mass or more without exceeding 10 % by mass

When the amount of solid latex to be added is below 0.1 % by mass, satisfactory water resistance cannot be obtained. If it is above 20 % by mass, the ink viscosity will increase with the lapse of time and the keeping quality of ink will not be satisfactory in many cases.

(Self-cross-linking type synthetic polymeric latex)

Self-cross-linking type synthetic polymeric latex is preferably used in the inkjet ink of the present invention. The examples includes the conjugate diene-based copolymerized latex such as styrene-butadiene copolymer and methylmethacrylate-butadiene copolymer; acrylic polymerized latex such as the polymer or copolymer of acrylic acid ester and methacrylic acid ester; vinyl polymer latex such as vinyl ethylene acetate copolymer; and functional group denatured polymerized latex by functional group-containing monomer such as the carboxyl group of various types these polymers. The example is the emulsion that contains an amino group and epoxy group and forms a film which acquires water resistance after water volatilization.

The specific examples of the self-cross-linking type emulsion are Movinyl 747, Movinyl 760H, Movinyl 4700, Movinyl 761H, Movinyl 718, Movinyl 2000 and Movinyl 3410 by Clariant Polymer, which are acryl copolymerized emulsions; Movinyl 771H and Movinyl 78H as vinyl acetate copolymerized emulsions; and Apretan 2200 as vinyl acetate-acryl copolymerized emulsion, without the present invention being restricted thereto.

(Core/shell structured polymer)

In the inkjet ink of the present invention, the latex of core/shell structure can be used. For the core/shell structured polymer to be used, the number-average molecular weight is preferably in the range of 500 through 100000, more preferably in the range of 1000 through 30000 for the purpose of improving the film forming performance, durability and suspension forming performance.

In this invention, various polymer types having different Tg's can be used. Of the polymers used, at least one polymer type preferably has Tg of 10 °C or more.

In the present invention, all conventionally known polymers can be used. The polymers used with particular preference include the polymer containing an acetal group as the major functional group, the polymer containing a carbonic acid ester group, the polymer containing a hydroxyl group and the polymer containing an ester group. The aforementioned polymer may include a substituent. This substituent may have a straight chain, branched chain or cyclic structure. Various forms of polymer having the aforementioned functional group are available on the market. They can be synthesized by the normal method. Further, these copolymers can be obtained by introducing an epoxy group into one polymer molecule which is later subjected to condensation and polymerization with other polymers. They can also be produced by graft polymerization using light or radiation.

The polymer containing an acetal group as the major functional group is exemplified by a polyvinyl butyral resin. The specific examples include #2000-L, #3000-1, #3000-2, #3000-4, #3000-K, #4000-1, #4000-2, #5000-A, #6000-C and #6000-EP by Denki Kagaku Kogyo Kabushiki Kaisha, and BL-1, BL-1H, BL-2, BL-2H, BL-5, BL-10, BL-S, BL-SH,

BX-10, BX-L, EM-1, BM-2, BM-5, BM-S, BM-SH, BH-6, BH-S, BH-1, BX-3, BX-5, KS-10, KS-1, KS-3 and KS-5 by Sekisui Chemical Co., Ltd.

The resin can be obtained as the derivative of polyvinyl alcohol (PVA). The maximum acetalization degree of the hydroxyl group of the original PVA is about 80 mol %, Normally, the acetalization degree of the hydroxyl group lies in the range of about 50 through 80 mol %. In the case of polyvinyl butyral, 1, 1-butylene dioxy group is formed as the acetal group. The acetalization degree in the sense in which it is used here does not refer to such acetal in the narrow sense of the word. It involves a general acetal group, namely, the compound made up of the compound containing a hydroxyl group (polyvinyl alcohol in this case) and the compound containing an aldehyde group (butanol in this case). There is no restriction to the hydroxyl group, but the preferred percentage of the hydroxyl group content is in the range of 10 through 40 mol %. Further, there is no particular restriction to the percentage of acetyl group content, but the preferred percentage of the acetyl group content is 10 mol % or less. The polymer containing the acetal as the major functional group indicates the polymer wherein the acetal group is formed by at least 30 mol % of the oxygen atoms contained in the polymer.

Other polymers containing the acetal group as the major functional group that can be used in the present invention include the Yupital series by Mitsubishi Engineering Plastics Co., Ltd.

The polymer containing the carbonic acid ester as the major functional group is exemplified by polycarbonate resin. The specific examples are Yupiron Series and Novalex Series by Mitsubishi Engineering Plastics Co., Ltd. The Yupiron Series is made of bisphenol A. The value differs according to the method of measurement, but the product having various molecular weights can be utilized. The Novalex Series having a molecular weight of 20000 through 30000 with a glass transition temperature of about 150 degrees can be used in the present invention, without being restricted thereto.

The polymer containing a carbonic acid ester as the major functional group indicates the polymer wherein at least 30 mol % of the oxygen atoms contained in the polymer contributes to forming the carbonic acid ester group.

The polymer containing a hydroxyl group as the major functional group is exemplified by polyvinyl alcohol (PVA). The solubility of PVA in organic solvent is low in many cases. However, if the PVA has a lower degree of saponification, the solubility in the organic solvent will increase. A highly water-insoluble PVA can be used as follows: It is first put in water phase and is then adsorbed by the suspension of the polymer after the organic solvent has been removed.

The PVA available on the market can be utilized in the present invention. The examples include Poval PVA-102, PVA-117, PVA-CSA, PVA-617, PVA-505 by Kuraray Co., Ltd. as well as the PVA for the sizing agent of special brand, and PVA for hot-melt molding. Further, the KL-506, C-118, R-1130, M-205, MP-203, HL-12E and SK-5102 can also be used as functional polymers.

The PVA having a degree of saponification of 50 mol % is generally employed. The PVA having a degree of saponification of about 40 mol % as in the LM-10HD can also be used. In addition to these PVAs, the PVA having a hydroxyl group as the major functional group can be used. It is possible to use the PVA wherein the hydroxyl group is formed by at least 20 mol % of the oxygen atoms included in the polymer.

Methacryl resin can be mentioned as the polymer containing an ester group as the major functional group. It is possible to use the Delpet Series 560F, 60N, 80N, LP-1, SR8500, and SR6500 by Asahi Chemical Industry Co., Ltd. The polymer containing an ester group as the major functional group refers to the polymer wherein the ester group is formed by at least 30 mol % of the oxygen atoms included in the polymer. One of these polymers can be used independently, or two and more can be used in combination. If these polymers contained account for 50 % or more in terms of mass ratio, other polymers or inorganic fillers may be contained.

The copolymer of these polymers can also be preferably used. For example, copolymerization of the hydroxyl group-containing polymer and various other polymers can be achieved as follows: A hydroxyl group is reacted with the monomer containing an epoxy group such as glycidyl methacrylate, After that, the resulting product is copolymerized with the methacrylic acid ester monomer by suspension polymerization.

(Aqueous polymer)

Aqueous polymer can be used in the inkjet ink of the present invention. The preferred example of aqueous polymer is a naturally-occurring polymer. The specific examples are proteins such as glue, gelatine, casein and albumin; natural rubbers such as Arabian rubber and tragacanth rubber; glycoside such as savonine; alginic acid derivatives such as alginic acid, propylene glycol alginate ester, triethanolamine alginate and ammonium alginate; and cellulose derivatives such as methyl cellulose, carboxymethyl cellulose, hydroxyethyl cellulose and ethylhydroxyethyl cellulose.

A synthetic polymer can be mentioned as a preferred example of aqueous polymer. Specific examples include polyvinyl alcohols, polyvinyl pyrrolidones, polyacryls, acrylic acid-acrylnitryl copolymer and potassium acrylate-acrylnitryl copolymer; acryl based resins such as vinyl acetate-acrylic acid ester copolymer, and acrylic acid-acrylic acid ester copolymer; styrene acrylic acid resin such as styrene-acrylic acid copolymer, styrene-methacrylic acid copolymer, styrene-methacrylic acid-acrylic acid ester copolymer, styrene-α-methylstyrene-acrylic acid copolymer, and styrene-α-methylstyrene-acrylic acid-acrylic acid ester copolymer; styrene-maleic acid copolymer, styrene-anhydrous maleic acid copolymer, vinylnaphthalene acrylic acid copolymer, and vinylnaphthalene maleic acid copolymer; and vinyl acdetate based polymers such as vinyl acetate-ethylene copolymer, vinyl acetate-fatty acid vinylethylene copolymer, vinyl acetate-maleic acid ester copolymer, vinyl acetate-crotonic acid copolymer and vinyl acetate-acrylic acid copolymer.

The molecular weight of the polymer is preferably in the range of 1000 or more without exceeding 200000, more preferably in the range of 3000 or more without exceeding 200000. If the molecular weight is below 1000, there will be a reduction in the effect of suppressing the growth and coagulation of the pigment particles. If it is over 200000, such problems as viscosity rise and dissolution failure tend to be raised.

The amount of the polymer to be added is preferably in the range of 10 % by mass or more without exceeding 1000 % by mass with respect to colorant, more preferably in the range of 50 % by mass or more without exceeding 200 % by mass. If it is below 10 % by mass, there will be a reduction in the effect of suppressing the growth and coagulation of the pigment particles. If it is over 1000 % by mass, such problems as viscosity rise and dissolution failure tend to be raised.

(Inorganic fine particles)

Inorganic fine particles can be put into the inkjet ink in order to control the ink viscosity. The inorganic fine particles are exemplified by inorganic pigments such as light calcium carbonate, heavy calcium carbonate, magnesium carbonate, karyon, clay, talc, calcium sulfate, barium sulfate, titanium dioxide, zinc oxide, zinc hydroxide, zinc sulfide, zinc carbonate, hydrotalcite, aluminum silicate, diatomaceous earth, calcium silicate, magnesium silicate, synthetic amorphous silica, colloidal silica, alumina, colloidal alumina, pseudo-boehmite aluminum hydroxide, lithopone, zeolite and magnesium hydroxide.

The average particle size of the inorganic fine particles is measured as follows: An electron microscope is used to observe the particles per se, cross section of the void layer or particles appearing on the surface, and to measure the diameters of any given 1,000 particles. the simple average value (number average particle size) thereof is calculated. This is the average particle size of the inorganic fine particles. In this case, the diameter of individual particles is represented in terms of a diameter of an assumed circle having the same area as the plane of projection.

(Emission stabilizer for thermal inkjet printer

The inkjet ink of the present invention can be used for thermal inkjet printer. In this case, to solve the problem of clogging of the head which is called "Gogation", it is possible to add the salt selected from among the $(M_1)_2SO_4$, $CH_3COO(M_1)$, Ph-COO$(M_1)$, $(M_1)NO_3$, $(M_1)C_1$, $(M_1)Br$, $(M_1)I$, $(M_1)_2SO_3$ and $(M_1)_2CO_3$ disclosed in the Unexamined Japanese Patent Application Publication No. 2001-81379 (Tokkai). In this case, $M_1$ indicates an alkali metal, ammonium or organic ammonium, and Ph denotes a phenyl group. The aforementioned alkali metal is exemplified by Li, Na, K, Rb and Cs. The examples of organic ammonium are methyl ammonium, dimethyl ammonium, trimethyl ammonium, ethyl ammonium, diethyl ammonium, triethyl ammonium, trihydroxy methylamine, dihydroxy methylamine, monohydroxy methylamine, monoethanol ammonium, diethanol ammonium, triethanol ammonium, N-methylmonoethanol ammonium, N-methyldioethanol ammonium, monopropanol ammonium, dipropanol ammonium, and tripropanol ammonium.

(Cross-linking agent)

A cross-linking agent can be put into the inkjet ink of the present invention. Specific examples of the cross-linking agent are epoxy curing agents (e.g., diglycidyl ethyl ether, ethylene glycol diglycidyl ether, 1,6-diglycidyl cyclohexane, N,N-diglycidyl-4-glycidyloxy aniline, sorbitol polyglycidyl ether, glycerol polyglycidyl ether), activated halogen based curing agents (e.g., 2,4-dichloro-4-hydroxy-1,3,5,-s-triazine), activated vinyl based compound (e.g., 1,3,5-tris acryloyl-hexahydro-s-triazine, bis-vinyl sulfonyl methyl ether), aluminum sodium alum, boric acid or its salts, and isocianate based compound.

(Mold releasing agent)

Silicone emulsion or solution containing metallic salt stearate can be input into the inkjet ink of the present invention in order to improve the mold releasing performance. The emulsion is exemplified by KM740, KM780, KM786, KM788, KM860 and KM862 (by Shin-Etsu Chemical Co. Ltd.). The metallic salt stearate is exemplified by zinc stearate having a release characteristic. For example, it is possible to use R-053D, R-1004 and R-070U (by Nisshin Kagaku Co., Ltd.). The amount to be added is preferably the same as that of the ink. In any case, the amount to be added is such that the emission performance from the head is not adversely affected.

(Anti-fading additive)

The conventionally known anti-fading additive can be input into the inkjet ink of the present invention. This anti-fading additive is intended to suppress the fading caused by exposure to light and various types of oxidized gases such as ozone, activated oxygen, NOx and SOx. The anti-fading additive is exemplified by antioxidants disclosed in the Unexamined Japanese Patent Application Publications Nos. 57-74192, 57-87989 and 60-72785 (Tokkaisho), ultraviolet absorbing agents disclosed in the Unexamined Japanese Patent Application Publications No. 57-74193 (Tokkaisho), hydrazides disclosed in the Unexamined Japanese Patent Application Publications No. 61-154989 (Tokkaisho), hindered amine antioxidant disclosed in the Unexamined Japanese Patent Application Publications No. 61-146591 (Tokkaisho), nitrogen-containing heterocyclic mercapto based compound disclosed in the Unexamined Japanese Patent Application Publications No. 61-177279 (Tokkaisho), thioether based antioxidants disclosed in the Unexamined Japanese Patent Application Publications Nos. 1-115677 and 1-36479 (Tokkaihei), hindered phenol based antioxidants of special structure disclosed in the Unexamined Japanese Patent Application Publications No. 1-36480 (Tokkaihei), ascorbic acids disclosed in the Unexamined Japanese Patent Application Publications Nos. 7-195824 and 8-150773 (Tokkaihei), zinc sulfate disclosed in the Unexamined Japanese Patent Application Publication No. 7-149037 (Tokkaihei), thiocyanates disclosed in the Unexamined Japanese Patent Application Publication No. 7-314882 (Tokkaihei), thiourea derivatives disclosed in the Unexamined Japanese Patent Application Publication No. 7-314883 (Tokkaihei), saccharides disclosed in the Unexamined Japanese Patent Application Publications Nos. 7-276790 and 8-108617 (Tokkaihei), phosphoric acid based antioxidants disclosed in the Unexamined Japanese Patent Application Publication No. 8-118791 (Tokkaihei), nitrites, sulfite and thiosulfate disclosed in the Unexamined Japanese Patent Application Publications No. 8-300807 (Tokkaihei), and hydroxyl amine derivative disclosed in the Unexamined Japanese Patent Application Publications No. 9-267544 (Tokkaihei). Further, the polycondensation product of dicyan diamide and polyalkylene polyamine disclosed in the Unexamined Japanese Patent Application Publication No. 2000-263928 (Tokkai) also provides a useful anti-fading additive in the inkjet ink of the present invention.

(pH buffer agent)

A pH buffer agent can be put into the inkjet ink of the present invention. The examples are found in organic and inorganic acids. The organic acids are exemplified by nonvolatile phthalic acid, terephthalic acid, salicylic acid, benzoic acid, sebatic acid, lauric acid, palmitic acid, ascorbic acid, citric acid, malic acid, lactic acid, succinic acid, oxalic acid, polyacrylic acid and benzilic acid.

(Wetting agent)

A wetting agent can be put into the inkjet ink of the present invention. The examples of the wetting agent include polyvalent alcohols and the ethers thereof such as ethylene glycol, propylene glycol, diethylene glycol, triethylene glycol, tetraethylene glycol, polyethylene glycol, glycerine, diethylene glycol diethylether, diethylene glycol mono-n-butyl ether, ethylene glycol monomethyl ether, ethylene glycol monoethyl ether, ethylene glycol monobutyl ether, methyl carbitol, ethyl carbitol, butyl carbitol, ethyl carbitol acetate, diethyl carbitol, triethylene glycol monomethyl ether, triethylene glycol monoethyl ether, propylene glycol monomethyl ether and tetraethylene glycol; acetates; nitrogen-containing compounds such as N-methyl-2-pyrrolidone, 1, 3-dimethyl imidazolidinone, triethanol amine, formaldehyde, and dimethyl formaldehyde; and dimethyl sulfoxides. One or two of these substances can be used. There is no restriction to the amount of these wetting agents to be used. Preferably 0.1 through 50 % by mass of the wetting agent, or more preferably 0.1 through 30 % by mass is put into the aforementioned ink.

(Antifoaming agent)

An antifoaming agent can be put into the inkjet ink of the present invention. There is no particular restriction to the antifoaming agent to be added. Commercially available products can be utilized. The examples of the antifoaming agent available on the market include KF96, 66, 69, KS68, 604, 607A, 602, 603, KM73, 73A, 73E, 72, 72A, 72C, 72F, 73F, 82F, 70, 71, 75, 80, 83A, 85, 89, 90, 68-1F, 68-2F (tradename) by Shinetsu Silicone Co. Ltd. There is no particular restriction to amount of these substances to be added. Preferably 0.001 through 2 % by mass of this compound is mixed with the ink of the present invention. If the amount of the compound is below 0.001 % by mass, foams tend to be produced when ink is prepared, and small bubbles in the ink cannot be easily removed. If the amount is over 2 % by mass, the generation of foams can be reduced, but ink repellency occurs at the time of printing, and the print quality is deteriorated in some cases. To prevent this, the amount to be added is preferably kept within the aforementioned range.

(Surface active agent)

The surface active agent preferably used in the inkjet ink of the present invention is exemplified by anionic surface active agents such as alkyl sulfate, alkyl ester sulfate, dialkyl sulfosuccinates, alkyl naphthalene sulfonate, alkyl phosphate, polyoxy alkylene alkyl ether phosphate, and fatty acid salt; nonionic surface active agents such as polyoxyethylene alkyl ethers, polyoxyalkylene alkyl phenyl ethers, acetylene glycols and polyoxyethylene-polyoxypropylene block copolymer; activators such as glycerine ester, sorbitan ester, polyoxyethylene fatty acid amide, and amineoxide; and cationic surface active agents such as alkyl amine salts and quaternary ammonium salts.

(Impurities)

In the present invention, when the colorant particles such as dispersed pigments are used, the dispersion stability is disturbed under the influence of the ion and other impurities. Thus, the amount of ions and other impurities in the ink is preferably reduced. The total amount of each of the ions that can be present is preferably 2000 ppm or less, more preferably 500 ppm or less for the monovalent cations such as sodium and potassium and monovalent anions such as chlorine ion and bromine ion. For the divalent cations such as calcium ion and magnesium ion and divalent anion such as sulfuric acid ion, the total amount of each is preferably 50 ppm or less, more preferably 20 ppm or less. For the trivalent anion such as phosphoric acid, the total amount of each is preferably 5 ppm or less, more preferably 2 ppm or less.

(Preparation of ink)

There is no particular restriction to the method of preparing the inkjet ink of the present invention. When preparing the ink including the dispersions such as pigments, disperse dyes, inorganic fine particles and resin fine particles, it is preferred to ensure that coagulation or sedimentation will not occur in the process of preparation. It is possible to adopt the method of preparation wherein the order of adding the dispersion, solvent, water, photosensitive resin and other additives, and the speed of adding them are adjusted, whenever required. Further, the ink during the process of preparation or thereafter may be subjected to processing of dispersion and heating by a bead mill or ultrasonic wave for the purpose of ensuring dispersion stability and re-dispersion of the coagulation having occurred during the process of preparation.

(Ink viscosity)

There is no particular restriction to the viscosity of the inkjet ink of the present invention. However, the viscosity is preferably in the range of 2 mPa.s or more without exceeding 100 mPa.s. It is preferred that the viscosity of the inkjet ink of the present invention should not depend on the shear rate.

The viscosity (modulus of elasticity of liquid) can be measured by rotary method, oscillation method or capillary tube method. The examples of the measuring instruments includes a Saybolt viscometer, Redwood viscometer and Brookfield analog viscometer. There is no particular restriction to the instrument to be used if it has been approved by using the standard solution for calibration of the viscometer specified in the JIS Z 8809. The Brookfield analog viscometer can be mentioned as an measuring instrument preferably used in the present invention. The viscosity varies with the temperature and pressure at the time of measurement. The present invention uses the value obtained by measurement at 25 °C under normal pressure.

There is no particular restriction to the method of 200 percent concentration when the viscosity change rate is o obtained. It is possible to mention the method of concentration by heating, the method of concentration by hot air, the method of concentration by depressurization and a combination of these methods. The method preferred in the present invention is a simple method of concentration wherein the hot air controlled to a predetermined temperature and humidity is blown in a constant-temperature drying oven under the normal pressure, whereby concentration is achieved.

(Electric conductivity)

In the inkjet ink of the present invention, from the viewpoint of ensuring the ink storage stability, electric conductivity is preferably in the range of 1 mS/m or more without exceeding 500 mS/m, more preferably in the range of 10 mS/m or more without exceeding 100 mS/m. If the electric conductivity of ink has exceeded 500 mS/m, emission failure occurs due to segregation of colorant. Further, when the electric conductivity of ink is below 1 mS/m, sufficient electrostatic repulsion for stable presence of dispersions cannot be obtained, with the result that coagulation occurs. Accordingly, if the electric conductivity is kept at 1 mS/m or more without exceeding 500 mS/m, stable presence of the dispersion is ensured.

In the ink of the present invention, there is no particular restriction to the means of achieving a desired electric conductivity. In the present invention, a desired electric conductivity can be achieved by using the pigment as the colorant and employing a polymer (polymeric dispersion) as the dispersion of the pigment, or by using an electric conductivity regulating agent, e.g., inorganic salts such as potassium chloride, ammonium chloride, sodium sulfate, sodium nitrate and sodium chloride, or aqueous amine such as triethanol amine, wherein one of these two methods can be selected for use or both methods can be used in combination.
The electric conductivity of the ink in the present invention can be easily measured according to the method specified in the JIS K 0400-13-10 (1999) or the method disclosed in Unexamined Japanese Patent Application Publication No. 61-61164 (Tokkaisho).

(Regulation of ion concentration)

In preparing the inkjet ink of the present invention, adequate regulation of ion concentration is preferred.
The aqueous solution containing dyes of a predetermined concentration is measured by the ICP-AES, and the measurement is converted into the concentration of the dye used in ink, whereby the ion concentration exhibiting the status of the ink is calculated. Distilled water or ion exchange water is used as water, and this makes it possible to estimate the ion concentration at the time of ink formation.
Then other additives are added and ink is prepared so that the ion concentration in ink is measured. If the target ion concentration has been exceeded, the aqueous solution containing the dye is passed through the ion exchange resin so that the ion concentration is reduced. Ion exchange is repeated several times and the ion concentration can be further reduced. If the desired ion concentration cannot be reached by this procedure, the additives other than the dye are also subjected to the process of ion exchange. Wherever required, they can be processed by activated carbon and filtration by a ultrafilter membrane.

(Degassing)

The dissolved oxygen concentration in the inkjet ink is preferably 2 ppm or less, more preferably 1 ppm or less. If the dissolved oxygen concentration in the inkjet ink has exceeded 2 ppm, cavitation will occur at the time of ink emission, and emission failure tends to occur.
There is no particular restriction to the method of regulating the dissolved oxygen concentration. It is possible to mention the method of degasifying the inkjet ink under reduced pressure, the method of degasifying the inkjet ink by application of ultrasonic wave, and the method of degasifying the inkjet ink by a hollow thread film for degassing. The method of degasifying by a hollow thread film is preferably used in particular.
In the method of degassing using a hollow thread film module, the following flow can be mentioned: Suction is performed from the degassing port on the side wall of the module to reduce the pressure outside the hollow thread film to the level of 10 kPa or less. Ink is supplied into the hollow thread film from the ink support port on the end of the module, and the dissolved gas in the ink having passed through the film is discharged. Then the degassed ink is discharged from the ink outlet on the other end of the module. In this method of degassing using the hollow thread film module, ink can be supplied outside the hollow thread film, and the internal pressure can be reduced. The commercially available degassing module of the hollow thread film used in the present invention can be used in the present invention. The specific examples include the MHF series by Mitsubishi Rayon Co., Ltd., and SEPAREL series by Dainippon Ink and Chemicals Incorporated.
A desired value of the dissolved oxygen can be reached according to the method of regulating the degree of depressurization in the process of degassing by the aforementioned hollow thread film, or the method of regulating the liquid ink processing speed (ml/min).
The dissolved oxygen concentration can be measured by the Ostwald method (A Course of Experimental Chemistry 1, Basic Operation, [1], P. 241, 1975, Maruzen), the mass spectrogram method, the method of using a simplified oxygen concentration meter such as a galvanic cell type and polarograph type concentration meters, or the color comparison analysis method. Further, the dissolved oxygen concentration can also be measured easily by the commercially available dissolved oxygen concentration meter (Model DO-30A by Toa Denpa Co., Ltd.)

(Ink safety)

The additives used in the inkjet ink and inkjet ink set of the present invention (a polymer capable of bonding by cross-linking between side chains upon exposure to actinic energy rays, and other additives) preferably have a low or no mutagenicity, acute toxicity or sensitization.

<<Recording medium>>

Various forms of paper, cloth, wood, and recording media for inkjet can be used as the recording medium applicable to the inkjet recording method in the present invention.

<Recording sheet>

Paper can be classified into coated paper and non-coated paper. The coated paper includes the art paper wherein the amount of coating per square meter is about 20 grams on one side, the coated paper wherein the amount of coating per square meter is about 10 grams on one side, the light-weight coated paper wherein the amount of coating per square meter is about 5 grams on one side, very thinly coated paper, matt coated paper finished by matting, dull-coated paper finished by dull coating, and newspaper. The non-coated paper includes printing paper A using 100% chemical pulps, printing paper B using 70% or more chemical pulps, printing paper C using 40 or more through 70% exclusive, printing paper D using less than 40% exclusive, and gravure paper having been subjected to a process of calendering containing a mechanical pulp. Further details are shown in "A Handbook of Paper Processing in Recent Years" by the Paper Processing Handbook Edition Committee, published by Tectimes, and "A Handbook of Printing Engineering" by the Japan Society of Printing Engineers.

Plain paper (regular paper) refers to the non-coated paper, special printing paper, and 80 through 200 μm non-coated paper constituting a part of the computer output paper. The plain paper used in the present invention is exemplified by high-quality printing paper, intermediate-quality printing paper, low-quality printing paper, thin printing paper, very thinly coated printing paper and colored quality paper, form paper, PPC paper and other computer output paper. To put it more specifically, the following paper and various types of modified or processed paper using the same can be mentioned. However, it is to be understood that the present invention is not restricted thereto.

Examples are:

quality paper, colored quality paper, recycled paper, duplicating paper including colored paper, OCR paper, carbonless paper including colored paper, Yupo 60, 80 and 100 microns, Yupocoat 70 and 90 microns, other synthetic paper, one-sided art paper (68 kg), coat paper (90 kg), format paper (70, 90 and 110 kg), Form PET 38 microns, and Mitsuorikun (all manufactured by Kobayashi Recording Paper);

OK quality paper, new OK quality paper, Sunflower, Phenix, OK Royal White, quality paper for export (NPP, NCP, NWP, Royal White), OK book paper, OK cream book paper, cream quality paper, OK map paper, OK Ishikari, Kyurei, OK form, OKH and NIP-N (all manufactured by New Oji Paper Co., Ltd.);

Kaneou, Higasihikari, quality paper for export, high quality paper for special demand, book paper, book paper L, light cream book paper, paper for textbook of science for elementary school, continuous slip paper, high quality NIP paper, Ginkan, Kinkan, Kinyou (W), Bridge, Capital, Ginkan book, Harp, Harp cream, SK Color, securities paper, Opera Cream, Opera, KYP Carte, Silvia HK, Excellent form, and NPI form DX (all manufactured by Nippon Seishi);

Pearl, Kinhishi, thin cream high quality paper, special-made book paper, super book paper, book paper, Diaform, and Inkjetform (all manufactured by Mitsubishi Paper Mills, Ltd.);

Kintan V, Kintan SW, Hakuzo, high quality publishing paper, Cream Kintan, Cream Hakuzo, securities and coupon paper, book paper, map paper, duplicating paper and HNF (all manufactured by Hokuetsu Paper Mill, Ltd.);

Shiorai, telephone directory paper, book paper, Cream Shiorai, Cream Shiorai (medium rough paper), Cream Shiorai (very rough paper) and DSK (all manufactured by Daishowa Paper Mill, Ltd.);

Sendai MP high quality paper, Nishikie, Raicho high quality paper, hanging paper, original paper for shikishi, dictionary paper, cream book, white book, cream high quality paper, map paper, and continuous slip paper (all manufactured by Chuetsu Pulp & Paper Co., Ltd.);
OP Kanezakura (Chuetsu), Kinsa, Reference book paper, exchange certificate stamp paper (white), form printing paper, KRF, white form, color form, (K)NIP, Fine PPC, Kishu Inject paper (all manufactured by Kishu Pulp & Paper Co., Ltd.);

Taio, bright form, Kant, Kant white, Dante, CM paper, Dante comic, Heine, pocket edition book paper, Heine S, new AD paper, YutoriroExcel, Excel Super A, Kanto Excel, Excel Super B, Dante Excel, Heine Excel, Excel Super C, Excel Super D, AD Excel, Excel Super E, New Bright Form, and New Bright NIP (all manufactured by Oji Paper Co., Ltd.);

Nichirin, Getsurin, Unrei, Ginga, Hakuun, Wice, Getsurin Ace, Hakuun Ace, and Unjin Ace (all manufactured by Japan Paper Industry Co., Ltd.);

Taio, Bright Form, and Bright Nip (all manufactured by Nagoya Paper Co., Ltd.);

Botan A, Kinbato, Tokubotan, Shirobotan A, Shirobotan C, Ginbato, Super Shirobotan A, Light Cream Shirobotan, special intermediate quality paper, Shirobato, Super intermediate quality paper, Aobato, Akabato, Kinbato M Snow Vision, Snow Vision, Kinbato Snow Vision, Shirobato M, Super DX, Hamanasu O, Akabato M, and HK Super printing paper (all manufactured by Honshu Paper Co., Ltd.);

Star Linden (A.AW), Star Elm, Star Maple, Star Laurel, Star Poplar, MOP, Star Cherry I, Cherry I Super, Cherry II Super, Star Cherry III, Star Cherry IV, Cherry III Super, Cherry IV Super (all manufactured by Maruju Paper Co., Ltd.); and SHF and TRP (all manufactured by Toyo Pulp Co., Ltd.).
Coated paper and art paper can be used as various forms of printing paper.

<Films>

All films that are commonly utilized can be used in the present invention. They are exemplified by a polyester film, polyolefin film, polyvinyl chloride film, and polyvinylidene chloride film. A resin coated paper as a photographic paper and Yupo paper as synthetic paper can also be used.

[Various forms of cloth]

Any of the natural fibers, chemical synthetic fibers and regenerated fiber can be used as various forms of cloth.

<Recording media for inkjet>

The recording media for inkjet are those wherein an ink receiving layer is formed on the surface by using an absorptive support member or non-absorptive support member on a substrate. The ink receiving layer is made up of a coating layer, swelling layer and minute void layer in some cases.
The swelling layer absorbs ink by the swelling of the ink receiving layer made up of a water-soluble polymer. The minute void layer is made of a binder and inorganic or organic particles wherein the secondary particle size is about 20 through 200 nm. Ink is absorbed by a fine void having a diameter of about 100 nm.
In recent years, the inkjet recording medium provided with the aforementioned fine void layer is preferably for an photograph image, wherein the RC paper employed as the substrate is designed in such a way that both sides of the paper substrate are coated with an olefin resin.

«Inkjet recording method»

In the inkjet image recording method of the present invention, the inkjet ink or inkjet ink set of the present invention is emitted on a recording medium and is cured by exposure to actinic energy rays.
The following describes the how to apply actinic energy rays to inkjet ink:

[Actinic energy ray irradiation]

(Actinic energy ray)

The actinic energy ray of the present invention is exemplified by electron beam, ultraviolet rays, $\alpha$ rays, $\beta$ rays, $\gamma$ rays and X-rays. Of these examples, the electron beam and ultraviolet rays are preferably used because of absence of hazards to human body, handing ease and wide spread for industrial use.
When the electron beam is used, the dose is preferably 0.1 through 30 Mrad. If it is below 0.1 Mrad, a sufficient effect of irradiation cannot be obtained. If it exceeds 30 Mrad, the support member may be deteriorated. This must be avoided.
When ultraviolet rays are used, the conventionally known light source can be used, as exemplified by a mercury lamp of low, medium or high pressure having an operation pressure of several 100 Pa through 1 MPa, a metal halide lamp, a xenon lamp having an emission wavelength in the ultraviolet range, cold-cathode tube, hot-cathode tube or LED.

(Light irradiation conditions subsequent to ink emission)

The actinic energy ray is preferably emitted 0.001 through 1.0 second, more preferably 0.001 through 0.5 second, after emission of the ink. To form a high definition image, it is particularly important that the irradiation timing should be as early as possible.

(Methods to apply actinic energy rays)

The procedure of applying actinic energy rays is disclosed in the Unexamined Japanese Patent Application Publication No. 60-132767 (Tokkaisho), wherein a light source is arranged on both sides of the head unit, and the head and light source are operated for scanning according to the shuttle method. Actinic energy rays are applied some time

after ink has been emitted. Further, curing of ink is finished by another light source which is not driven. The U. S. Patent No. 6145979 introduces a method of using optical fibers, and the method of applying the light of a collimated light source to the surface of the mirror arranged on the side of the head unit, whereby ultraviolet rays are applied to the recording section.

In the image forming method of the present invention, any one of the aforementioned irradiation methods can be used. Further, the actinic energy rays can be applied in two separate steps. In the first step, actinic energy rays are applied during the time period of 0.001 through 2.0 seconds according to the aforementioned method. In the second step, actinic energy rays are applied again. This is the preferably used method of irradiation. The shrinkage of the recording medium that may occur at the time of curing can be reduced by separating the process of irradiation with actinic energy rays into two steps.

(Printer members)

In the inkjet printer used in the implementation of the inkjet recording method of the present invention, to avoid irradiation on the surface due to scattered reflection of actinic energy rays, e.g. ultraviolet rays, the members to be used preferably have a lower transmittance and reflectivity with respect to actinic energy rays.

The irradiation unit is preferably provided with a shutter. For example, when ultraviolet rays are used, the ratio of intensity of illumination at the time of the shutter open/close operation preferably meets the following equation: Shutter open/shutter close = 10 or more. This ratio is more preferably 100 or more, still more preferably 10000 or more.

The following describes the inkjet printer used in the implementation of the inkjet recording method of the present invention:

[Inkjet printer]

In the inkjet printer used in the present invention, for example, the image forming section includes:

a platen arranged in a horizontal position to suck and support the rear surface (opposite to the image forming surface) of the recording medium within a predetermined range by the upper surface through the drive of the suction apparatus;
a recording head for emitting ink toward the recording medium through the ink outlet of the nozzle;
a carriage equipped with the recording head and irradiation device with actinic energy rays to move in the scanning direction at the time of image formation;
a drive circuit board mounted on the carriage to drive this carriage;
a guide member extending in the scanning direction to guide the movement of the carriage;
a linear scale extending in the scanning direction wherein an optical pattern is arranged in the longitudinal direction; and
a linear encoder sensor mounted on the carriage to read the optical pattern arranged on the linear scale and to output it as a clock signal.

The recording head is arranged in such a way that the image forming surface of the recording medium conveyed on the platen at the time of recording an image is placed face to face with the nozzle surface wherein the outlet of the recording head is formed. Each head is supplied with ink from the recording ink cartridge and colorless ink cartridge through the piping tube. A plurality of heads are mounted, as required. For example, when six colors of different CMK density levels, Y and colorless inks are used, eight recording heads are mounted. A irradiation device with actinic energy rays is provided on both sides of each of the heads.

Referring to drawings, the following describes an example of the inkjet printer that can be used in the inkjet recording method in the present invention, without the present invention being restricted to the inkjet printer illustrated below:

Fig. 1 is a schematic cross sectional view representing an example of an inkjet printer to which the inkjet recording method of the present invention is applicable.

The inkjet printer 1 includes a head carriage 2, recording head 3, irradiation device 4 and platen section 5. In the inkjet printer 1, the platen section 5 is placed under the recording medium P, and is provided with a function of absorbing ultraviolet rays. This arrangement produces very stable representation of a high definition image.

The recording medium P is guided by a guide member 6, and is moved from the front of Fig. 1 to the back by the operation of the conveying device (not illustrated). The head scanning device (not illustrated) scans the recording head 3 supported by the head carriage 2 through the back-and-forth motion of the head carriage 2 in the Y direction of Fig. 1.

The head carriage 2 is mounted on the upper side of the recording medium P and accommodates a plurality of recording heads 3 (to be described later) in conformity to the number of the colors used for image printing on the

recording medium P, with the ink outlet placed on the bottom side. The head carriage 2 is arranged on the main unit of the inkjet printer 1 in a form freely movable in the back-and-forth direction. The back-and-forth motion is provided by the drive of the head scanning device in the Y direction of Fig. 1.

In Fig. 1, the drawing is given on the assumption that the head carriage 2 accommodates the recording heads 3 for yellow (Y), magenta (M), cyan (C) and black (K) as well as white (W), light yellow (Ly), light magenta (Lm), light cyan (Lc) and light black (Lk). However, the number of the colors of the recording heads 3 to be accommodated in the head carriage 3 can be determined as required.

In the recording head 3, the inkjet ink supplied from the ink supply device (not illustrated) is emitted to the recording medium P from the ink outlet by the operation of several emission devices (not illustrated) mounted inside. The inkjet ink emitted from the recording head 3 contains the polymer that can be bonded by cross-linking between side chains when exposed to the actinic energy rays. It is cured by polymerization when exposed to the actinic energy rays.

During the scanning operation of traveling in the Y direction of Fig. 1 from one end of the recording medium P to the other end of the recording medium P by the drive of the head scanning device, the recording head 3 ensures that inkjet ink in the form of ink particles is emitted to a predetermined area (to which ink is allowed to be emitted) of the recording medium P. Thus, ink particles can reach the specified area.

The aforementioned scanning operations are repeated several times. After inkjet ink has been emitted to one permitted area, the recording medium P is moved from the front of Fig. 1 to the back by the conveying device as required. While the recording medium P is again scanned by the head scanning device, inkjet ink is emitted by the recording head 3 to the next permitted area, on the back side in Fig. 1, adjacent to the aforementioned permitted area.

The aforementioned operation is repeated several time. The inkjet ink is emitted from the recording head 3 in synchronism with the head scanning device and conveying device, whereby an image is formed on the recording medium P.

The irradiation device 4 includes an ultraviolet lamp that emits the ultraviolet rays having a predetermined wavelength range with stable exposure energy, and a filter that transmits the ultraviolet rays of a predetermined wavelength. In this case, the ultraviolet lamps that can be used include a mercury lamp, metal halide lamp, excimer laser, ultraviolet laser, cold-cathode tube, hot-cathode tube, black light and LED (Light-Emitting Diode). Of these, the belt-shaped metal halide lamp, cold-cathode tube, hot-cathode tube, mercury lamp and black light are preferably utilized.

The irradiation device 4 has almost the same shape as that of the maximum area which can be set on the inkjet printer 1, out of the permitted area to which inkjet ink is emitted by one scanning operation of the recording head 3 through the drive of the head scanning device, or is greater than the permitted area.

The irradiation device 4 is fixed on both sides of the head carriage 2, almost parallel to the recording medium P.

As described above, to adjust the intensity of illumination of the ink emitting section, the light of the entire recording head 3 is shielded. Not only that, it is also effective to make sure that the distance h2 between the ink emission section 31 of the recording head 3 and the recording medium P is greater than the distance h1 between the irradiation device 4 and recording medium P ($h1 < h2$), or to increase the distance d between the recording head 3 and irradiation device 4. It is more effective to provide a bellows structure 7 between the recording head 3 and irradiation device 4.

The wavelength of the ultraviolet rays emitted from the irradiation device 4 can be changed as desired, by replacing the ultraviolet lamp or filter provided on the irradiation device 4.

(Recording head)

The recording head to be used (injection printing head) can adopt either the on-demand system or continuous system. Further, the emission method can be exemplified by the electromechanical transducing system (e.g., a single key cavity, double cavity, bender, piston, share mode and share wall systems), electrothermal energy conversion system (e.g., thermal inkjet and bubble jet (registered trademark), electrostatic suction system (e.g., field control and slit jet systems), and discharge system (e.g., spark jet system). The electromechanical transducing system is preferably used, but any of them can be utilized.

(Nozzle plate adhesive)

In the recording head of the inkjet printer of the present invention, the epoxy based adhesive can be used as the ink flow path and nozzle plate adhesive. A combination between the epoxy resin and curing agent is preferably used for its bonding strength.

(Head oscillation waveform system and ink discharge at both ends)

The inkjet printer applicable in the present invention is preferably designed and controlled in such a way that, when the inkjet recording head is located within the printing range in reciprocal scanning operation and ink is not being

emitted, the meniscus of the nozzle that does not emit ink is oscillated without allowing the ink to be emitted; whereas, when the inkjet recording head is located at both ends in reciprocal scanning operation, the ink is discharged and discarded from all the nozzles. This structure ensures the excellent ink emission stability of the recording head and provides an image characterized by high printing accuracy.

The following describes the method of oscillating the meniscus at the inkjet nozzle opening and ink discharge when located at both ends in the reciprocal scanning operation:

In the recent inkjet printer, in an effort to obtain a sharp and high-quality image, the size of the ink particles to be emitted is further reduced, or pigments or polymers are added to ink in many cases. When such an ink is used, water content or organic solvent is evaporated from the surface of the nozzle opening if ink is not used. This causes the ink at the end of the meniscus to be locally thickened easily. Thus, when emission of ink is suspended even for a very short time, the speed of initial ink emission is reduced at the time of re-emission, or the mass, speed and direction of the initial several ink particles are changed, with the result that serious deterioration of image quality occurs.

Generally, the nozzle diameter is about 20 through 40 $\mu$m, and the nozzle opening area is very small. The viscosity of ink at the nozzle opening surface is locally increased rapidly by the volatilization of a very small amount of water and organic solvent.

The aforementioned temporary suspension of emission occurs when the head is located at the print wait position or the cartridge speed is increased or decreased, and even during the printing operation, depending on the image pattern.

If water or solvent in the ink is evaporated from the nozzle opening surface during suspension of emission, there is a local increase in the viscosity of ink. When ink emission is restarted, normal emission cannot be observed in the initial stage and this may cause a serious deterioration of image quality in some cases. Especially the ink containing latex or polymer, the viscosity tends to rise. When emission is suspended even for a very short period of time -- e.g., for several seconds --, the viscosity of the ink on the nozzle surface undergoes a local sudden rise, when a very small amount of water or solvent is evaporated from the nozzle opening surface. Thus, when emission is restarted thereafter, the direction, amount and speed of the emission of the initial several ink particles are reduced, with the result that a low-quality image is produced.

Especially in the case of an ink containing polymer, when even a very small amount of the water content has been evaporated, a thin layer of film is formed on the nozzle opening surface. This thin film causes a substantial reduction in the amount of emission, or a failure in the next emission in some cases.

In the case of the pigment ink containing pigment particles, if a very small amount of water or solvent has evaporated from the nozzle opening, local coagulation of pigments will occur in some cases.

Further, to get high-resolution images, the sized of the emitted particles have been reduced to 1/5 through 1/10 the conventional size. This has brought about a reduction in the speed at which the ink having been locally thickened is carried away by emission. This has caused difficulties in replacement by a low-viscosity bulk ink, and emission failure resulting from suspension of emission cannot be remedied easily. Especially in the low-humidity environment, water and solvent tend to evaporate easily, and emission failure is likely to occur.

The size of ink particles has been reduced and pigments or polymers have been added to ink. This has produced a high-quality image of superb durability. However, the density of the solids in ink has been increased over the conventional level. Thus, when emission has been suspended even for a very short period of time, normal emission cannot be obtained in the initial phase when ink emission is restarted. Means must be taken to avoid this.

To avoid the evaporation of the ink components through the nozzle opening, an organic solvent of high boiling point is added to the ink, but the viscosity of the high-performance ink containing a high density of polymer and pigment tends to be increased by the volatilization of water and organic solvent at the nozzle opening. Mere addition of the organic solvent of high boiling point cannot provide a sufficient means of preventing rise in ink viscosity on the nozzle surface.

To solve the aforementioned problem, it is effective to oscillate the ink meniscus during the process of printing as well, thereby reducing the viscosity of the ink locally thickened at the nozzle opening. Further, it is effective to use the method of conducting emission a periodic basis in the process of printing as well, thereby removing the ink locally thickened at the nozzle opening. If the method of removing the ink locally thickened at the nozzle opening is used, almost all the thickened ink can be eliminated by removing the ink corresponding to the capacity inside the nozzle. This does not cause a great increase in ink loss.

Fig. 2 is a schematic diagram showing an enlarged view of the nozzle opening and its surrounding area of an inkjet printer, wherein a series of aspects at the time of micro-oscillation are represented.

As shown in Fig. 2 (a), in the meniscus section 51 formed on the nozzle opening 21, a change in ink viscosity, a change in pigment density formation of a film, or phase separation will result from evaporation of organic solvents and water from the ink surface when ink emission is suspended, as described above. As a result, fluctuation in image density will be caused by emission failure.

In the present invention, when the inkjet recording head is located within the printing range in reciprocal scanning operation. When ink is not being emitted, the meniscus of the nozzle that does not emit ink is oscillated without allowing the ink to be emitted.

To be more specific, as shown in Figs. 2 (b) and (c), when ink is not emitted, the piezoelectric element is driven by drive pulses without causing the ink particles to be emitted. Thus, the meniscus section 51 is provided with micro-oscillation, thereby eliminating the possibility of a viscosity rise resulting from drying when ink is not emitted. Fig. 2 (d) shows that the viscosity of the meniscus section 51 is reduced to the same level as that of other areas by micro-oscillation.

In the present invention, when the inkjet recording head is located on both ends in the reciprocal scanning operation, the thickened ink at or close to the nozzle opening 21 is discharged and discarded. This arrangement ensures that the thickened ink at or close to the nozzle opening 21 can be removed on a periodic basis in the process of printing as well, whereby emission failure does not occur easily.

In the present invention, the inkjet recording head is controlled as described above, whereby excellent emission stability of inkjet recording head can be ensured. Furthermore, the image having been produced is characterized by superb resistance to fretting and water, and outstanding uniformity.

In the present invention, moreover, when the inkjet recording head is located within the printing range in reciprocal scanning operation, the meniscuses of all the nozzles are preferably oscillated without allowing the ink to be emitted. This structure further avoids possible phase separation due to drying during the process of printing.

The present invention is characterized in that oscillation is given to the meniscus of the non-emission nozzle (ink not emitted) within the printing range, while oscillation is given to the meniscuses of all nozzles outside the printing range. The oscillation given within the printing range preferably has such a high frequency that the printing speed is not affected by it. The oscillation given outside the printing range preferably has a low frequency so as to suppress the heat generation of the head. The ratio of the oscillation given outside the printing range relative to that given within the printing range is preferably 1.05 through 5.0, more preferably 1.1 through 2.5.

To give oscillation, voltage is applied without allowing the ink to be emitted to the piezoelectric element, and the process of shrinkage (expansion) of the ink chamber, expansion (shrinkage) and shrinkage (expansion) is repeated, whereby the meniscus is oscillated. When the meniscus is oscillated, the ink thickened on the surface of the meniscus is mixed with the ink of the non-thickened bulk, whereby the problem of thickening is solved.

When the ink chamber is compressed (expanded), the positive (negative) pressure having occurred in the ink chamber pushes out (pulls in) ink from the nozzle end and manifold end. In its place, the negative (positive) pressure wave occurs to the nozzle end and manifold end, and propagates at sound velocity toward the other end. Assume that the length of the pressure chamber is L, and sound velocity is c. Then the time (L/c) for this pressure wave to propagate from one end to the other in the ink chamber is called the AL (Acoustic Length which is half the acoustic resonance period of that ink chamber). For example, assume that the length of the ink chamber is 1 mm and the sound velocity in the ink is 1 km/s. Then 1 AL = 1 $\mu$sec.

After the lapse of one AL, each wave reaches the other end of the ink chamber and uniform negative (positive) pressure prevails in the entire ink chamber. The pressure wave having reached the manifold end and nozzle end are each reflected and are reversed to become the positive (negative) pressure wave. Thus, it propagates to the other end at the velocity of sound. After the lapse of one AL, each wave reaches the other and uniform positive (negative) pressure prevails in the entire ink chamber.

As described above, the ink chamber is compressed and the pressure having occurred in the ink chamber is repeatedly reversed for each AL, and is damped. Thus, the ink chamber is compressed (expanded) and is kept unchanged. When the pressure wave has returned to the original positive (negative) pressure after the lapse of 1 AL, the state of the shrinkage (expansion) of the ink chamber is put back to the original level. Then the negative (positive) pressure occurs in the ink chamber. Thus, the positive (negative) pressure remaining in the ink chamber can be cancelled.

As described above, the pressure having been produced by deformation of the ink chamber is repeatedly reversed for each AL. It is damped after the lapse of the time corresponding to an even number of times the AL. However, since the state of pressure comes back to that in the initial phase, the residual pressure can be cancelled if the deformation of the ink chamber is put back to the original state at this timing. If the width of the pulses for oscillation is set in this manner, oscillation can be followed by emission.

The oscillation of the meniscus in the present invention can be classified as an oscillation outside the printing range and oscillation inside the printing range. The oscillation outside the printing range is the oscillation of the meniscus when the head is located outside the printing range, e.g., the head is located at the home position, or when the cartridge is in the process of acceleration or deceleration. The oscillation inside the printing range is the oscillation of the meniscus of the non-emission nozzle when the head is located inside the printing range, or during the process of printing. In this case, it is necessary to detect the non-emission nozzle from the emission signal and to apply oscillation signals on a selective basis.

In the present invention, the oscillation is preferably given in rectangular waves.

The following describes the details of the procedure of applying oscillation in the present invention:

In the case of the oscillation mode outside the printing range, the meniscuses of all the nozzles are oscillated when the recording head is located outside the printing range.

Fig. 3 is a schematic diagram showing an example of the method of applying oscillation outside the printing range.

To put it more specifically, 4AL-wide pulses are applied to the electrodes of an even number of channels at intervals of 12 ALs, and the same signals are applied to an odd number of channels 4 ALs off. Fig. 3 (a) shows the pulses to be applied to the electrodes of an even and odd number of channels and the differential voltage pulses to be applied to the side wall between the channels. Further, Fig. 3 (b) is a schematic diagram showing how the meniscus of the channel is oscillated accordingly.

The micro-oscillation outside the printing range is applied to all the nozzles, and this requires a long time. Therefore, it is applied at longer intervals than the micro-oscillation inside the printing range from the viewpoint of unwanted heat generation at the recording head.

The principle of emission in the shear mode is as follows: When the voltages applied to the electrodes arranged on both sides of the side wall of the ink chamber are different from each other, the wall is deformed in response to the differential voltage. Thus, when ink is not emitted, the voltage of the same width, e.g., a 2 AL-wide voltage is applied to the electrodes of all channels at the same time intervals. When ink is emitted, the time interval and length of the voltage of the channel from which ink is to be emitted are displaced, and the differential potential is generated so that the wall is deformed. If the wall of the ink chamber is shared by the adjacent ink chamber and ink is emitted from a certain channel, simultaneous emission from both channels is disabled. From the viewpoint of avoiding cross talking, the channels from which ink is to be emitted at the same time should be separated from each other by a distance corresponding to two channels or more. This problem is solved by adoption of a three-channel emission method wherein all the channels are classified into three groups and ink is emitted on an sequential basis.

In the case of the oscillation mode inside the printing range, the non-emission nozzle is detected from the emission signal, and oscillation signals are applied on a selective basis. As described above, in the shear mode head, the wall of the ink channel is shared by the adjacent ink chamber. When ink is emitted from one channel, the two adjacent channels are also affected, and the meniscuses are oscillated. Thus, when ink is emitted from one channel, ink is not emitted from the two adjacent channels. But there is no need of applying micro-oscillation to them. The micro-oscillation should be applied only when none of the three continuous channels are driven.

Fig. 4 is a schematic diagram showing an example of the method of applying oscillation inside the printing range.

For example, when all three channels a, b and c do not emit ink, the 2AL-wide pulse is applied to three channels at the same time interval. Thus, if the pulse of channel b is connected to the ground, differential voltage is produced between a and b and b and c, and the wall is deflected. Thus, micro-oscillation is applied to the three channels a, b and c.

As described above, the micro-oscillation inside the printing range is produced in the manner similar to that of forming emission pulses. Accordingly, even if the micro-oscillation is produced inside the printing range, the printing speed is not reduced. Further, the voltage of the micro-oscillation pulse is half the voltage of the emission pulse, and therefore, ink is not emitted from the non-emission nozzle.

That the inkjet recording head is located inside the printing range in the reciprocal scanning mode signifies that the inkjet recording head is located inside the printing range during the process of printing. That the inkjet recording head is inside the printing range in the reciprocal scanning mode without ink being emitted means that the inkjet recording head is located inside the printing range during the process of printing, but the ink is not emitted due to the reason related to the arrangement of the image to be formed, for example.

That the inkjet recording head is located at both ends in the reciprocal scanning mode signifies that the inkjet recording head in the process of printing in the reciprocal scanning mode is located at or close to the point wherein the direction is switched. In the present invention, this point must be the point wherein the image formation is not affected by discharging and discarding the ink for the purpose of discharging and discarding a small amount of thickened ink from the nozzle on a periodic basis during the process of printing.

That the inkjet recording head is located outside the printing range in the reciprocal scanning mode means that the inkjet recording head is located except inside the printing range in the reciprocal scanning mode. This is exemplified by the case wherein the inkjet recording head is in the process of acceleration or deceleration in the reciprocal scanning mode.

(Ink particle capacity and resolution)

In an image forming method wherein ink is emitted to a recording medium using an inkjet printer containing a plurality of the recording head in the direction of the outlet arrangement wherein each of the recording heads has a plurality of ink particle emission outlets arranged in a row, and the emitted ink is cured by exposure to light, the resolution of an image is preferably 600 dpi or more, and the amount of the ink particles coming out of this emission outlet is preferably in the range of 1 through 30 pl per emission. The image resolution and amount of ink particles are used on a selective basis as required. In this case, dpi is defined as the number of dots per 2.54 cm.

(Cleaning mechanism)

In an inkjet printer, air bubbles or dust may enter the supply path from the ink tank to the recording head in some cases. The ink path inside the recording head and the nozzle of the emission outlet are designed as small as several tens of microns. Accordingly, when foreign substances such as air bubbles and dust have entered the paths, ink emission failure or kinking may occur. The ink emission failure is also caused by thickening and locking of the ink close to the nozzle resulting from a long standing period. Further, the face in the vicinity of the outlet will be covered with fine mists of ink resulting from high-speed and long-term emission during the process of recording, and the ink particles will be deflected by wetting. This may produce a poor image quality.
Thus, the inkjet printer is preferably provided with a cleaning device (to ensure recovery operation) to maintain superb recording performances.
To avoid locking of the ink due to natural evaporation or entry of dust into the nozzle, the outlet surface is covered with a cap made up of an elastic member in the standby mode (by the capping method). To recover the nozzle to a normal status during the recording operation, or after a long standing period, pressure is applied into the ink flow path by a pump of the ink supply system (by the pumping method), whereby ink is forcibly discharged from the outlet. At the same time, air, dust and thickened ink are pushed out.
In a further method, the ink that does not contribute to image recording is discharged toward a predetermined ink acceptor (by preliminary discharge method) and the liquid level in the nozzle of the outlet is adjusted, whereby normal emission is ensured from the start of recording operation. (Nozzle detection method)
The nozzle used in the inkjet head is very small. The ink per se is very likely to solidify. This tends to result in clogging of the nozzle and ink emission failure.
In an effort to avoid this, a conventional inkjet printer is known to contain an emission failure detecting device for detecting the status of ink emission failure in the event of clogging of ink and emission failure.
The following mechanisms have been proposed such emission failure detecting devices: One of them is a pair of electrodes arranged face to face with each other sandwiching the nozzle provided forward in the direction of ink emission. Another is an electrostatic capacity detecting circuit for detect the emission failure by detecting a change in the amount of electrostatic capacity between these electrodes (Unexamined Japanese Patent Application Publication No. 2000-318178 (Tokkai) (pp. 2-5, Fig. 1)). In still another proposed mechanism, a detection electrode is provided as an ink particle detecting device for each nozzle and power is supplied to the electrode only during the process of ink emission, whereby ink emission failure is detected (Unexamined Japanese Patent Application Publication No. 2001-146022 (Tokkai) (pp. 2-9, Fig. 1). In a further proposed mechanism, electrodes are arranged in the vicinity of each ink outlet of the printing head and outside the printing head, and the continuity between these two electrodes is detected in synchronism with ink emission operation, whereby the presence or absence of ink emission is checked according to the result of this detection (Unexamined Japanese Patent Application Publication No. 2002-127478 (Tokkai) (pp. 2-4, Fig. 1). These failure detecting devices can be used in the present invention.

(Conveyance method)

In the sheet-like recording medium conveying method, the carriage with the recording head mounted thereon performs reciprocal motion perpendicular to the direction of conveying the recording medium such as a sheet (hereinafter abbreviated as "sheet"), and ink particles are emitted by the recording head during this time so that and recording operation is performed. This arrangement is adopted in the so-called serial inkjet printer wherein the sheet is conveyed on an intermittent basis only for a specified length (e.g. length corresponding to the width of the emission outlet row of the recording head) for each of the aforementioned reciprocal motions. In this serial inkjet printer, a high accuracy is required in this intermittent sheet feed. This is because, if this accuracy is poor, there will be an overlap of the connections between the recording areas wherein recording is performed for each reciprocal motion of the recording head, or a gap will be formed between recording areas. This will caused a serious deterioration of the recording quality. In many of the sheet conveying mechanisms, the motor rotating drive force is transmitted to the sheet conveying roller by gears or belts, whereby the sheets are conveyed.
For the sheet conveying roller to get a predetermined torque, the aforementioned transmission is decelerated. Various factors can be considered as adversely affecting the aforementioned sheet conveying accuracy. Of these, the most crucial factor is the manufacturing accuracy of the power transmission members such as gears and belts as well as the sheet conveying rollers. To put it in greater details, the most crucial factor is found in the eccentricity of the power transmission members such as gears, and the sheet conveying rollers. To minimize the impact of the eccentricity, efforts are made to improve the accuracy of these components.
To ensure that the recording medium is not displayed by conveying operation, the platen is provided with a plurality of suction holes formed at predetermined intervals in the direction perpendicular to the direction of conveying the recording member, and these suction holes are integrally connected into one piece by a connecting hole so that

suction is performed. In this structure, the recording medium is sucked by the platen and is held in close contact with each other, whereby printing and conveyance are carried out. This structure prevents the recording medium from being contaminated by the recording medium rubbing against the recording head.

(Heating and fixing)

For the purpose of improving the mapping performance (value C) and durability of the formed image after printing, the image is subjected to the processes of heating or pressing, heating and pressing, and addition of solvent and plasticizer. After that, the image is further subjected to the process of heating, or the process of heating after supply of the thermoplastic resin to the image. Alternatively, the image is subjected to a combination of these processes. This procedure can be repeated several times.

In the process of heating and fixing, the image should be provided with the sufficient energy to provide the aforementioned effect. If excessive energy is applied, the supporting member will be deformed and glossiness will be deteriorated. The heating temperature should be applied to the extent that the image can be sufficiently smoothed. This temperature is preferably in the range of 60 through 200 °C, more preferably in the range of 80 through 160 °C.

The heater built in the printer or a separately installed heater can be used for heating. A heating roller is preferably used as a heating device, because it removes the possibility of causing irregularities, and is better fitted for continuous processing in a limited space. Further, the heating and fixing apparatus in an electrophotographic system can be used as this device. This is more economical.

In the present invention, a heating roller is preferably used as the heating and pressing device. In the heating and pressing procedure using he heating roller used preferably in the present invention, the inkjet recording medium containing the recorded image is passed between the metallic cylinder incorporating a heating source and the silicone rubber roller.

The heating roller preferably used in the present invention contains an metallic cylinder and silicone rubber roller. Of these, the metallic cylinder can be made of such a general material as ion or aluminum. To improve the resistance to heat, it can be covered with tetrafluoroethylene or polytetrafluoroethylene-perfluoroalkyl vinyl ether polymer. To improve the feeling of smoothness after fixing, the material can be mirror-finished. The metallic cylinder preferably incorporates a heating source. In the heating roller, pressure is applied between the metallic cylinder and silicone rubber roller, and the silicone rubber roller is deformed to form the so-called nip. The nip width is 1 through 20mm preferably 1.5 through 7 mm. If the linear pressure is below $9.8 \times 10^4$ Pa, the sufficient hardness of the thermoplastic resin layer cannot be obtained by heating and pressing. If the linear pressure exceeds $4.9 \times 10^6$ Pa, glossiness will be deteriorated and the recording medium will be curled seriously. This is not preferred.

The surface roughness of the roller in contact with the image forming surface out of the rollers used in the heating and pressing process can be measured, for example, by the RSTPLUS non-contact 3D minute surface configuration measuring system by Wyco Inc. When this measuring instrument is used, the average surface roughness can be measured preferably after the curvature of the roller has been corrected. for the purpose of achieving the advantages of the present invention, it is preferred that the average surface roughness of the pressure roller should not exceed 100 mm. When a pigment ink is used as a colorant, control of the surface condition of the pressing member is crucial to achieve the effects of the present invention.

When the recorded image medium having passed through the process of heating and pressing is discharged from the pressure roller, a solution containing silicone emulsion or metallic salt of stearic acid can be added to the recording medium for the purpose of improving the release characteristics. The KM740, KM780, KM786, KM788, KM860 and KM862 (by Shinetsu Chemical Co. Ltd.) can be used as silicone emulsion. The stearate having a release characteristic can be mentioned as the metallic salt stearate. For example, the R-053D, R-1004 and R-070U (all by Nisshin Kagaku Co., Ltd.) can be used. The amount of the additive is preferably in the range of 0.5 through 5 % when added to the thermoplastic resin solids. When the additive is added to the ink, the amount of additive is about the same as the volume of the ink, without adversely affecting the emission performance from the head. The object of adding the aforementioned mold releasing agent is to ensure the release characteristics of the printed portion. This is because the mold releasing agent is contained in the thermoplastic resin layer of the non-printed portion and will function at the time of heating and pressing. However, since thermoplastic resin layer is covered with pigment ink on the image portion provided with pigment ink, the mold releasing agent in the thermoplastic resin layer does not work.

(Recording speed)

The image forming speed of the inkjet printer heavily depends on the recording speed in the main scanning direction. The recording speed can be expressed by the following formula (1):

Formula (1)

Recording speed (mm/s) = frequency of ink emission (Hz = dots/s)/image recording density (dots/mm)

If the frequency of ink emission is below 25 kHz, the image formation time will be too long. For example, when the A4-sized paper (210 x 298 mm) is to be filled with dots at a recording density of 720 dpi x 720 dpi using the head having only one nozzle at a frequency of 25 kHz, then 30 minutes or more will be required even if the sub-scanning time (paper feed time) is assumed as 0.

(Print drying method)

In the inkjet printing operation of the present invention, actinic energy rays are applied after ink emission. This is following by a process of drying using a heater or the like. Various forms of drying methods are available, as exemplified by cold air drying by a fan, drying by a coil heater, halogen heater, infrared heater or quartz heater, and microwave drying.

[Laminate]

In the present invention, after printing, the image portion is subjected to laminate processing, whereby durability of the image is improved. In the laminate processing, a transparent laminate film having an adhesive layer is bonded on the image portion. Either the hot or cold lamination method can be used.

[Image preservation method]

The image forming by the inkjet recording method of the present invention can be displayed in a room or outdoors as it is, or can be preserved in a clear film, album or photo stand. It can be preserved or displayed in any desired form.

## EXAMPLES

The present invention will now be specifically described with reference to examples. However, the present invention is not limited thereto. In the examples, "parts" or "%" is employed and represents "parts by weight" or "% by weight", respectively, unless otherwise specified. «Synthesis of Polymer »

<Synthesis of Polymer 1>

After dissolving 100 g of polyacrylic acid (at a weight average molecular weight of 800,000) in 750 g of methanol while heated, 16 g of 4-hyroxybutyl acrylate glycidyl ether and 11 g of pyridine as a catalyst were added. The resulting mixture was stirred for 24 hours while maintained at 60 °C. Thereafter, the temperature of the system was raised to 95 °C. After distilling out methanol while dripping water, an ion-exchange resin (PK-216, produced by Mitsubishi Chemical Industries, Ltd.) treatment was carried out and pyridine was removed, whereby a 15% aqueous non-volatile component solution was prepared. IRGACLTRE 2959 (produced by Ciba Specialty Chemicals Co.) as a photopolymerization initiator, which is represented by Formula (7) of n = 1 was blended with the above 15% aqueous solution so that the weight ratio of the former to the latter is 0.1 to 100. Thereafter, the resulting mixture was diluted with ion-exchanged water, whereby a 10% aqueous Polymer 1 solution was prepared.

<Synthesis of Polymer 2>

Each of 56 g of glycidyl methacrylate, 48 g of p-hydroxybenzaldehyde, 2 g of pyridine, and 1 g of N-nitroso-phenylhydroxyamine ammonium salt was placed in a reactor and the resulting mixture was stirred for 8 hours employing a hot water bath at 80 °C.

Subsequently, 45 g of saponified polyvinyl acetate at a degree of polymerization of 1,700 and at a saponification ratio of 88% dispersing was dispersed into 225 g of ion-exchanged water. Thereafter, 4.5 g of phosphoric acid and p-(3-methacryloxy-2-hydropoxypropyloxy)benzaldehyde prepared by the above reaction was added to the resulting solution so that the modification ratio with respect to saponified polyvinyl acetate should be 1 mol%. The resulting mixture was stirred at 90 °C for 6 hours. After cooling the resulting solution to room temperature, 30 g of the basic ion-exchange resin

was added followed by stirring for one hour. Subsequently, the ion-exchange resin was filtered out and IRGACURE 2959 (produced by Ciba Specialty Chemicals Co.) as a photopolymerization initiator was blended with the above 15% aqueous solution so that the weight ratio of the former to the latter is 0.1 to 100. Thereafter, the resulting mixture was diluted with ion-exchanged water, whereby 10% Polymer 2 was prepared.

If desired, the modification ratio was regulated by changing the degree of polymerization and saponification of saponified polyvinyl acetate and the added amount of p-(3-methaclyoxy-2-hydroxypropyloxy)benzaldehyde.

<<Preparation of Ink Set>>

Dye type Ink Sets 1 - 12 were prepared as follows.

[Preparation of Ink Set 1]

Ink Set 1 was prepared which was composed of Magenta Ink M1 and Black Ink K1 which were prepared according to the following procedures.

(Preparation of Magenta Ink M1)

| | |
|---|---|
| C.I. Acid Red 35 | 5 parts |
| 10% aqueous solution of High Molecular Compound 1 | 28 parts |
| Glycerin | 7 parts |
| Diethylene glycol | 15 parts |
| Diethylene glycol monobutyl ether | 2 parts |
| OLFINE (produced by Nissin Chemical Industry Co., Ltd.) | 0.2 part |

Ion-exchange water was added to the above mixture to bring the total volume to 100 parts, whereby Magenta Ink M1 was prepared.

(Preparation of Black Ink K1)

Black Ink K1 was prepared in the same manner as above Magenta Ink M1, except that C.I. Acid Red 35 was replaced with C.I. Direct lack 19.

[Preparation of Ink Set 2]

Ink Set 2, composed of Magenta Ink M2 and Black Ink K2, was prepared in the same manner as above Ink Set 1, except that 10% aqueous Polymer 1 solution was replaced with a compound (RSP at a degree of polymerization of main chain PVA of 1,700, a saponification ratio of 88%, a modification ratio of 0.9 mol%, and a solid concentration of 10%, produced by Toyo Gosei Co., Ltd.).

[Preparation of Ink Set 3]

Ink Set 3, composed of Magenta Ink M3 and Black Ink K3, was prepared in the same manner as above Ink Set 1, except that the 10% aqueous Polymer 1 solution was replaced with a 10% aqueous Polymer 2 solution.

[Preparation of Ink Set 4]

Ink Set 4, composed of Magenta Ink M4 and Black Ink K4, was prepared in the same manner as above Ink Set 3, except that the degree of polymerization of the main chain PVA of Polymer and the modification ratio were changed to 2,000 and 3.8 mol%, respectively.

[Preparation of Ink Set 5]

Ink Set 5, composed of Magenta Ink M5 and Black Ink K5, was prepared in the same manner as above Ink Set 3, except that the degree of polymerization of the main chain PVA of Polymer 2, the saponification ratio, and the

modification ratio were changed to 2,000, 99%, and 1.4 mol%, respectively.

[Preparation of Ink Set 6]

Ink Set 6, composed of Magenta Ink M6 and Black Ink K6, was prepared in the same manner as above Ink Set 3, except that the degree of polymerization of the main chain PVA of Polymer 2, the saponification ratio, and the modification ratio were changed to 2,000, 70%, and 4 mol%, respectively.

[Preparation of Ink Set 7]

Ink Set 7, composed of Magenta Ink M7 and Black Ink K7, was prepared in the same manner as above Ink Set 3, except that the degree of polymerization of the main chain PVA of Polymer 2, the saponification ratio, and the modification ratio were changed to 3,500, 88%, and 1.0 mol%, respectively.

[Preparation of Ink Set 8]

Ink Set 8, composed of Magenta Ink M8 and Black Ink K8, was prepared in the same manner as above Ink Set 3, except that the degree of polymerization of the main chain PVA of Polymer 2, and the modification ratio were changed to 300 and 4.0 mol%, respectively.

[Preparation of Ink Set 9]

Ink Set 9 was prepared which was composed of Magenta Ink M9 and Black Ink K9 which were prepared according to the following procedures.

(Preparation of Magenta Ink M9)

| | |
|---|---|
| Diepoxyacrylic acid ester of 1,4-butanediol (LR8765, produced by BASF) | 10 parts |
| IRGACURE 651 (a photoinitiator, produced by Ciba Specialty Chemicals Inc.) | 0.4 part |
| C.I. Acid Red 35 10% aqueous INOGEN solution (produced by | 4 parts |
| Dai-Ichi Kogyo Seiyaku Co., Ltd.) | 7 parts |
| Diethylene glycol | 15 parts |

Ion-exchange water was added to the above mixture to bring the total volume to 100 parts, whereby Magenta Ink M9 was prepared.

(Preparation of Black Ink K9)

Black Ink K9 was prepared in the same manner as above Magenta Ink M9, except that C.I. Acid Red 35 was replaced with C.I. Direct Black 19.

[Preparation of Ink Set 10]

Ink Set 10, which was composed of Magenta Ink M10 and Black Ink K10, was prepared in the same manner as above Ink Set 1, except that the 10% aqueous Polymer 1 solution was replaced with water of the same volume.

[Preparation of Ink Set 11]

Ink Set 11, which was composed of Magenta Ink M11 and Black Ink K11, was prepared in the same manner as above Ink Set 3, except that the 10% aqueous Polymer 2 solution was replaced with a 10% aqueous polyvinyl alcohol solution (at a degree of polymerization of 2,000 and a saponification ratio of 88%).

[Preparation of Ink Set 12]

Ink Set 12 was prepared which was composed of Magenta Ink M12 and Black Ink K12 which were prepared

according to the following procedures.

(Preparation of Magenta Ink 12)

| | |
|---|---|
| C.I. Acid Red 35 | 5 parts |
| TAKELAC W-6060 (urethane based soap-free latex at a solid concentration of 30%, Tg of 25 °C, and an average particle diameter of 150 nm, produced by Takeda Pharmaceutical Co., Ltd.) | 9 parts |
| Glycerin | 7 parts |
| Diethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total volume to 100 parts, whereby Magenta Ink M12 was prepared.

(Preparation of Black Ink K12)

Black Ink K12 was prepared in the same manner as above Magenta Ink M12, except that C.I. Acid Red 35 was replaced with C.I. Direct Black 12.

[Preparation of Ink Set 13]

Ink Set 13 was prepared which was composed of Yellow Ink 13, Magenta Ink M13, Cyan Ink 13, Light Magenta Ink LM13, Light Cyan Ink LC13, and Black Ink K13 which were prepared according to the following procedures.

(Preparation of Yellow Ink Y13)

| | |
|---|---|
| C.I. Acid Yellow 23 | 5 parts |
| 10% aqueous solution of High Molecular Compound 2 in which the degree of polymerization of the main chain PVA and the modification ratio were changed to 2,000 and 3.8 mol%, respectively | 28 parts |
| Glycerin | 7 parts |
| Diethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total volume to 100 parts, whereby Yellow Ink Y13 was prepared.

(Preparation of Magenta Ink M13)

Magenta Ink M13 was prepared in the same manner as above Yellow Ink Y13, except that C.I. Acid Yellow 23 was replaced with C.I. Acid Red 35.

(Preparation of Cyan Ink M13)

Cyan Ink C13 was prepared in the same manner as above Yellow Ink Y13, except that C.I. Acid Yellow 23 was replaced with C.I. Direct Blue 199.

(Preparation of Light Magenta Ink M13)

Light Magenta Ink LM13 was prepared in the same manner as above Magenta Ink M13, except that the added amount of C.I. Acid Red 35 was changed to 1 part.

(Preparation of Light Cyan Ink LC13)

Light Cyan Ink LC13 was prepared in the same manner as above Cyan Ink C13, except that the added amount of C.I. Direct Blue 199 was changed to 1 part.

(Preparation of Black Ink K13)

Black Ink K13 was prepared in the same manner as the above magenta ink, except that C.I. Acid Red 35 was replaced with C.I. Direct Black.

[Preparation of Ink Set 14]

Ink Set 14 was prepared which was composed of Magenta Ink M14 and Black Ink K14 which were prepared according to the following procedures.

(Preparation of Magenta Ink M14)

| | |
|---|---|
| C.I. Acid Red 35 | 5 parts |
| 10% aqueous solution of High Molecular Compound 2 in which the degree of polymerization of the main chain PVA and the modification ratio were changed to 2,000 and 3.8 mol%, respectively | 28 parts |
| 20% aqueous gas phase method silica (AEROSIL 300, produced by Nippon Aerosil Co., Ltd.) dispersion | 2.5 parts |
| Boric acid (a cross-linking agent, and a pH buffer agent) | 0.3 part |
| Antifading agent S-1 | 0.2 part |
| Antifoaming agent (M-75, at a solid concentration of 40%, produced by Shin-Etsu Silicone Co., Ltd.) | 1 part |
| Glycerin | 7 parts |
| Diethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total volume to 100 parts, whereby Magenta Ink M15 was prepared.

(Preparation of Black Ink K14)

Black Ink K14 was prepared in the same manner as above Magenta Ink M14, except that C.I. Acid Red 35 was replaced with C.I. Direct Black 19.

(Antifading Agent S-1)

$HOC_2H_4SC_2H_4OH$

(Preparation of Ink Set 15)

Ink Set 15 was prepared which was composed of Magenta Ink M15 and Black Ink K15 which were prepared according to the following procedures.

(Preparation of Magenta Ink M15)

| | |
|---|---|
| C.I. Acid Red 35 | 5 parts |
| 10% aqueous solution of High Molecular Compound 2 in which the degree of polymerization of the main chain PVA and the modification ratio were changed to 2,000 and 3.8 mol%, respectively | 28 parts |

(continued)

| | |
|---|---|
| Colloidal silica (SNOWTEX S at a solid concentration of 30%, produced by Nissan Chemical Industries Co., Ltd.) | 1.7 parts |
| Cross-linking agent (BARNOX DNW-500, water dispersible isocyanate a solid concentration of 80%, produced by Dainippon Ink and Chemicals, Inc.) | 1 part |
| Antifading agent S-1 | 0.2 part |
| Antifoaming agent (KM-75 at a solid concentration of 40%, produced by Shin-Etu Silicone Co., Ltd.) | 1 part |
| Glycerin | 7 parts |
| Diethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total volume to 100 parts, whereby Magenta Ink M15 was prepared.

(Preparation of Black Ink K15)

Black Ink K15 was prepared in the same manner as above Magenta Ink M15, except that C.I. Acid Red 35 was replaced with C.I. Direct Black 19.

[Preparation of Ink Set 16]

Ink Set 16 was prepared which was composed of Magenta Ink M16 and Black Ink K16 which were prepared according to the following procedures.

(Preparation of Magenta Ink M16)

| | |
|---|---|
| C.I. Acid Red 35 | 5 parts |
| 10% aqueous solution of High Molecular Compound 2 in which the degree of polymerization of the main chain PVA and the modification ratio were changed to 2,000 and 3.8 mol%, respectively | 28 parts |
| Ammonium benzoate (a stabilizer for thermal heads) | 1 part |
| Glycerin | 7 parts |
| Diethylene glycol | 15 part |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total volume to 100 parts, whereby Magenta Ink M16 was prepared.

(Preparation of Black Ink K16)

Black Ink K16 was prepared in the same manner as above Magenta Ink M16, except that C.I. Acid Red 35 was replaced with C.I. Direct Black 19.

Pigment type Ink Sets 17 - 33 were prepared as described below.

(Preparation of Pigment Dispersion)

<Yellow Pigment Dispersion>

The following additives were mixed and the resulting mixture was placed in a polypropylene bottle together with 200 g of 0.5 mm diameter zirconia beads, followed by sealing. Subsequently, dispersion was carried out for 5 hours, employing a paint shaker, and the resulting dispersion was diluted with ion-exchanged water, whereby a yellow pigment dispersion of a 10% yellow pigment content was prepared.

| | |
|---|---|
| C.I. Pigment Yellow 150 | 20 parts |
| Styrene-acrylic acid copolymer (at a molecular weight of 10,000 and an acid value of 120) | 12 parts |
| Diethylene glycol | 15 parts |
| Ion-exchanged water | 53 parts |

<Magenta Pigment Dispersion>

The following additives were mixed and the resulting mixture was placed in a polypropylene bottle together with 200 g of 0.5 mm diameter zirconia beads, followed by sealing. Subsequently, dispersion was carried out for 5 hours, employing a paint shaker, and the resulting dispersion was diluted with ion-exchanged water, whereby a magenta pigment dispersion of a 10% magenta pigment content was prepared.

| | |
|---|---|
| C.I. Pigment Red 122 | 25 parts |
| JOHNCRYL 61 (produced by Johnson. Polymer Co.) | 18 parts in solids |
| Diethylene glycol | 15 parts |
| Ion-exchanged water | 42 parts |

<Cyan Pigment Dispersion>

The following additives were mixed and the resulting mixture was placed in a polypropylene bottle together with 200 g of 0.5 mm diameter zirconia beads, followed by sealing. Subsequently, dispersion was carried out for 5 hours, employing a paint shaker, and the resulting dispersion was diluted with ion-exchanged water, whereby a cyan pigment dispersion of a 10% cyan pigment content was prepared.

| | |
|---|---|
| C.I. Pigment Blue 15 : 3 | 25 parts |
| JOHNCRYL 61 (produced by Johnson Polymer Co.) | 15 parts at solids |
| Glycerin | 10 parts |
| Ion-exchanged water | 50 parts |

The following additives were mixed and the resulting mixture was placed in a polypropylene bottle together with 200 g of 0.5 mm diameter zirconia beads, followed by sealing. Subsequently, dispersion was carried out for 5 hours, employing a paint shaker, and the resulting dispersion was diluted with ion-exchanged water, whereby a black pigment dispersion of a 10% black pigment content was prepared.

| | |
|---|---|
| C.I. Pigment Black 7 | 20 parts |
| Styrene-acrylic acid copolymer (at a molecular weight of 7,000 and an acid value of 150) | 10 parts |
| Glycerin | 10 parts |
| Ion-exchanged water | 60 parts |

[Preparation of Ink Set 17]

Ink Set 17 was prepared which was composed of Magenta Ink M17 and Black Ink K17 which were prepared according to the following procedures.

(Preparation of Magenta Ink M17)

| | |
|---|---|
| Magenta pigment dispersion | 30 parts |
| 10% aqueous solution of High Molecular Compound | 28 parts |
| Glycerin | 7 parts |
| Diethylene glycol | 15 parts |
| Diethylene glycol monobutyl ether | 2 parts |

(continued)

| | |
|---|---|
| OLFINE e1010 (produced by Nissin Chemical Industry Co., Ltd.) | 0.2 part |

Ion-exchanged water was added to the above mixture to bring the total volume to 100 parts, whereby Magenta Ink M17 was prepared.

(Preparation of Black Ink K17)

Black Ink K17 was prepared in the same manner as above Magenta Ink M17, except that the magenta pigment dispersion was replaced with the black pigment dispersion.

[Preparation of Ink Set 18]

Ink Set 18 composed of Magenta Ink M18 and Black Ink K18 was prepared in the same manner as above Ink Set 17, except that the 10% aqueous Polymer 1 solution was replaced with a compound (RSP, at a degree of polymerization of the main chain PVA and a modification ratio of 0.9 mol%, produced by Toyo Gosei Co., Ltd.) in which in Formula (4), R is represented by a p-phenylene group.

[Preparation of Ink Set 19]

Ink Set 18 composed of Magenta Ink M19 and Black Ink K19 was prepared in the same manner as above Ink Set 17, except that the 10% aqueous Polymer 1 solution was replaced with a 10% aqueous Polymer 2 solution.

[Preparation of Ink Set 20]

Ink Set 20 composed of Magenta Ink M20 and Black Ink K20 was prepared in the same manner as above Ink Set 19, except that the degree of polymerization of the main chain PVA and the modification ratio of Polymer 2 were changed to 2,000 and 3.8 mol%, respectively.

[Preparation of Ink Set 21]

Ink Set 21 composed of Magenta Ink M21 and Black Ink K21 was prepared in the same manner as above Ink Set 19, except that the degree of polymerization of the main chain PVA, the saponification ratio, and the modification ratio of Polymer 2 were changed to 2,000, 99%, and 1.4 mol%, respectively.

[Preparation of Ink Set 22]

Ink Set 22 composed of Magenta Ink M22 and Black Ink K22 was prepared in the same manner as above Ink Set 19, except that the degree of polymerization of the main chain PVA, the saponification ratio, and the modification ratio of Polymer 2 were changed to 2,000, 70%, and 1.4 mol%, respectively.

[Preparation of Ink Set 23]

Ink Set 23 composed of Magenta Ink M23 and Black Ink K23 was prepared in the same manner as above Ink Set 19, except that the degree of polymerization of the main chain PVA, the saponification ratio, and the modification ratio of Polymer 2 were changed to 3,500, 88%, and 1.0 mol%, respectively.

[Preparation of Ink Set 24]

Ink Set 24 composed of Magenta Ink M24 and Black Ink K24 was prepared in the same manner as above Ink Set 19, except that the degree of polymerization of the main chain PVA and the modification ratio were changed to 300 and 4.0 mol%, respectively.

[Preparation of Ink Set 25]

Ink Set 25 was prepared which was composed of Magenta Ink M25 and Black Ink K25 which were prepared according to the following procedures.

(Preparation of Magenta Ink M25)

| | |
|---|---|
| Diepoxyacrylic acid ester of 1,4-butanediol (LR8765, produced by BASF) | 10 parts |
| IRGACURE 651 (a photoinitiator, produced by Ciba Specialty Chemicals Inc.) | 0.4 parts |
| Magenta Pigment Dispersion | 30 parts |
| 10% aqueous NOIGEN ET150 solution (produced by Dai-Ichi Kogyo Seiyaku Co., Ltd.) | 7 parts |
| Diethylene glycol | 15 parts |

Ion-exchanged water was added to the above mixture to bring the total volume to 100 parts, whereby Magenta Ink M25 was prepared.

(Preparation of Black Ink K25)

Black Ink K25 was prepared in the same manner as above Magenta Ink M25, except that the magenta pigment dispersion was replaced with the black pigment dispersion.

[Preparation of Ink Set 26]

Ink Set 26 composed of Magenta Ink M26 and Black Ink K26 was prepared in the same manner as above Ink Set 17, except that the 10% aqueous Polymer 1 solution was replaced with water in the same amount.

[Preparation of Ink Set 27]

Ink Set 27 composed of Magenta Ink M27 and Black Ink K27 was prepared in the same manner as above Ink Set 17, except that the 10% aqueous Polymer 2 solution was replaced with a 10% aqueous polyvinyl alcohol (at a degree of polymerization of 2,000 and a saponification ratio of 88%) solution.

[Preparation of Ink Set 28]

Ink Set 28 was prepared which was composed of Magenta Ink M28 and Black Ink K28 which were prepared according to the following procedures.

(Preparation of Magenta Ink M28)

| | |
|---|---|
| Magenta pigment dispersion | 30 parts |
| TAKELUC W-6060 (a urethane based soap-free latex at a 30% solid concentration, a Tg of 25 °C, and an average particle diameter of 150 nm, produced by Takeda Pharmaceutical Co., Ltd.) | 9 parts |
| Glycerin | 7 parts |
| Diethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total volume to 100 parts, whereby Magenta Ink M28 was prepared.

(Preparation of Black Ink K28)

Black Ink K28 was prepared in the same manner as above Magenta Ink M28, except that the magenta pigment dispersion was replaced with the black pigment dispersion.

[Preparation of Ink Set 29]

Ink Set 29 was prepared which was composed of Magenta Ink M29 and Black Ink K29 which were prepared according to the following procedures.

(Preparation of Magenta Ink M29)

| | |
|---|---|
| C.I. Pigment Red 122 | 10 parts |
| AJISPFR PB821 (produced by Ajinomoto-Fine-Techno Co., Inc) | 3 parts |
| ARONIX M5700 (produced by Toagosei Co., Ltd.) | 7 parts |
| Ethylene oxide-added 1,6-hexadiol acrylate | 72 parts |
| 3-Methoxybutyl acrylate | 8 parts |
| IRGACURE 368 (produced by Ciba Geigy Specialty Chemicals Co.) | 5 parts |

The above components were mixed, and after stirring, the resulting solution was filtered via a filter, whereby active ray curable type Magenta Ink M29 was prepared.

(Preparation of Black Ink K29)

| | |
|---|---|
| Carbon black (MA-7, produced by Mitsubishi Chemical Corp. | 10 parts |
| AJISPER PB821 (produced by Ajinomoto-Fine-Techno Co., Inc.) | 3 parts |
| ARONIX M5700 (produced by Toagosei Co., Ltd.) | 7 parts |
| Ethylene oxide-added 6-hexadiol acrylate | 72 parts |
| 3-Methoxybutyl acrylate | 8 parts |
| IRGACURE 369 (produced by Ciba Specialty Chemicals Inc.) | 5 parts |

The above components were mixed, and after stirring, the resulting solution was filtered via a filter, whereby active ray curable type Black Ink K29 was prepared.

[Preparation of Ink Set 30]

Ink Set 30 was prepared which was composed of Yellow Ink Y30, Magenta Ink M30, Cyan Ink C30, Light Magenta Ink LM30, Light Cyan Ink LC30, and Black Ink K29 which were prepared according to the following procedures.

(Preparation of Yellow Ink Y30)

| | |
|---|---|
| Yellow pigment dispersion | 30 parts |
| 10% aqueous solution of High Molecular Compound 2 in which the degree of polymerization of the main chain PVA and the modification ratio were changed to 2,000 and 3.8 mol%, respectively | 28 parts |
| Glycerin | 7 parts |
| Diethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total volume to 100 parts, whereby Magenta Ink M28 was prepared.

(Preparation of Magenta Ink M30)

Magenta Ink M30 was prepared in the same manner as above Yellow Ink Y30, except that the yellow pigment dispersion was replaced with the magenta pigment dispersion. (Preparation of Cyan Ink C30)

Cyan Ink M30 was prepared in the same manner as above Yellow Ink Y30, except that the yellow pigment dispersion was replaced with the cyan pigment dispersion.

(Preparation of Light Magenta Ink LM30)

Light Magenta Ink LM30 was prepared in the same manner as above Magenta Ink M30, except that the added amount of the magenta pigment dispersion was changed to 6 parts.

(Preparation of Light Cyan Ink LC30)

Light Cyan Ink LC30 was prepared in the same manner as above Cyan Ink C30, except that the added amount of the cyan pigment dispersion was changed to 6 parts.

(Preparation of Black Ink K30)

Black Ink K30 was prepared in the same manner as above Yellow Ink Y30, except that the yellow pigment dispersion was replaced with the black pigment dispersion.

[Preparation of Ink Set 31]

Ink Set 31 was prepared which was composed of Magenta Ink M31 and Black Ink K31 which were prepared according to the following procedures.

(Preparation of Magenta Ink M31)

| | |
|---|---|
| Magenta Pigment Dispersion | 30 parts |
| 10% aqueous solution of High Molecular Compound 2 in which the degree of polymerization of the main chain PVA and the modification ratio were changed to 2,000 and 3.8 mol%, respectively | 28 parts |
| 20% aqueous gas phase method silica (AEROSIL 300, produced by Nippon Aerosil Co., Ltd.) | 2.5 parts |
| Boric acid (a cross-linking and pH buffer agent) | 0.3 part |
| Antifading agent S-1 | 0.2 part |
| Antifoaming agent (KM-75 at 40% solid concentration, produced by Shin-Etsu Silicone Co., Ltd.) | 1 part |
| Glycerin | 7 parts |
| Diethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total volume to 100 parts, whereby Magenta Ink M31 was prepared.

(Preparation of Black Ink K31)

Black Ink K31 was prepared in the same manner as above Magenta Ink Y31, except that the magenta pigment dispersion was replaced with the black pigment dispersion.

[Preparation of Ink Set 32]

Ink Set 32 was prepared which was composed of Magenta Ink M32 and Black Ink K32 which were prepared according to the following procedures.

(Preparation of Magenta Ink M32)

| | |
|---|---|
| Magenta pigment dispersion | 30 parts |
| 10% aqueous solution of High Molecular Compound 2 in which the degree of polymerization of the main chain PVA and the modification ratio were changed to 2,000 and 3.8 mol%, respectively | 28 parts |
| Colloidal silica (SNOETEX S at a 30% solid concentration, produced by Nissan Chemical Co., Ltd.) | 1.7 parts |
| Cross-linking agent (BARNOCK DNW-500, a water-dispersible isocyanate, at an 80% solid concentration, produced by Dainippon Ink and Chemicals, Inc.) | 1 part |
| Antifading agent S-1 | 0.2 part |
| Antifoaming agent (KM-75 at a 40% solid concentration, produced by Shin-Etsu Silicone Co., Ltd.) | 1 part |
| Glycerin | 7 parts |
| Diethylene glycol | 15 parts |
| Diethylene glycol monobutyl ether | 2 parts |
| OLFINE e1010 (Nissin Chemical Industry Co., Ltd.) | 0.2 part |

Ion-exchanged water was added to the above mixture to bring the total volume to 100 parts, whereby Magenta Ink M32 was prepared.

(Preparation of Black Ink K32)

Black Ink K32 was prepared in the same manner as above Magenta Ink M32, except that the magenta pigment dispersion was replaced with the black pigment dispersion.

[Preparation of Ink Set 33]

Ink Set 33 was prepared which was composed of Magenta Ink M33 and Black Ink K33 which were prepared according to the following procedures.

(Preparation of Magenta Ink M33)

| | |
|---|---|
| Magenta Pigment Dispersion | 30 parts |
| 10% aqueous solution of High Molecular Compound 2 in which the degree of polymerization of the main chain PVA and the modification ratio were changed to 2,000 and 3.8 mol%, respectively | 28 parts |
| Ammonium benzoate (a stabilizer for thermal heads) | 1 part |
| Glycerin | 7 parts |
| Diethylene glycol | 15 parts |
| Diethylene glycol monobutyl ether | 2 parts |
| OLFINE e1010 (produced by Nissin Chemical Co., Ltd.) | 0.2 part |

Ion-exchanged water was added to the above mixture to bring the total volume to 100 parts, whereby Magenta Ink M33 was prepared.

(Preparation of Black Ink K33)

Black Ink K33 was prepared in the same manner as above Magenta Ink M33, except that the magenta pigment dispersion was replaced with the black pigment dispersion.

(Synthesis of Polymer P-1)

A three-liter four-necked flask was fitted with a dripping apparatus, a thermometer, a nitrogen gas introducing pipe, a stirrer and a reflux cooling pipe, and 1,000 g of ethyl acetate was refluxed while heated. Subsequently, 1,000 g

of monomers of styrene, stearyl methacrylate, and acetacetoxyethyl methacrylate at a ratio of 50, 20, and 30 was sampled. Further, 20 g the mixed solution which was prepared by adding 20 g of N,N'-azobisisovaleronitrile to the above monomers was dripped over two hours, and the resulting mixture underwent reaction at the same temperature for 5 hours, whereby Polymer P-1 at a solid concentration of 50% by weight was synthesized.

(Synthesis of Polymer P-2)

Polymer P-2 at a solid concentration of 50% by weight was synthesized in the same manner as Polymer P-1, except that the ratio of monomers of styrene, stearyl methacrylate, acetacetoxyethyl methacrylate, and methacrylic acid was changed to 35, 20, 30, and 15.

(Production Process of Minute Core Particles MC1)

In a pot of CLEARMIX CLM-0.8S (produced by M Technique Co.) placed were 16.2 g of M Dye described below, 1.8 g of FS BLUE 1504, produced by Arimoto Chemical Co., Ltd., 2.9 g in terms of solids of Polymer P-2 which was polyvinyl butyral BL-S (produced by Sekisui Chemical Co., Ltd.), and 140 g of ethyl acetate, and the dye was completely dissolved while stirring. A mixture prepared by adding 9 g of AQUARON KH05 into 255 g of pure water was then added to the dye solution, and the resulting mixture was emulsified at a rotation rate of 20,000 rpm over 5 minutes. Thereafter, ethyl acetate was removed under a reduced pressure, whereby Minute Core Particles MC1 were prepared.

(M Dye)

M Dye

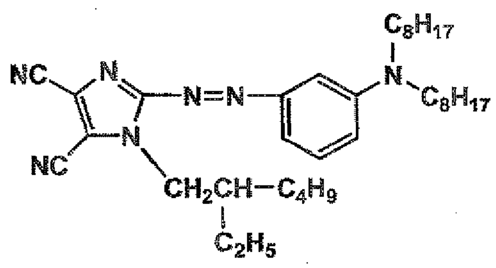

(Production Process of Minute Core Particles KC1)

In a pot of CLEARMIX CLM-0.8S (produced by M Technique Co.) placed were 21 g of OIL BLACK 860, produced by Orient Chemical Co., Ltd.), 10.5 g in terms of solids of polyvinyl butyral BL-S (produced by Sekisui Chemical Co., Ltd.), and 140 g of ethyl acetate, and the dye was completely dissolved while stirring. A mixture prepared by adding 9 g of AQUARON KH05 into 248 g of pure water was then added to the dye solution, and the resulting mixture was emulsified at a rotation rate of 20,000 rpm over 5 minutes. Thereafter, ethyl acetate was removed under a reduced pressure, whereby Minute Core Particles KC1 were prepared.

(Production Process of Core-Shell Type Minute Colored Particles MCC1)

Transferred to a three-necked flask was 260 g of Minute Core Particle Dispersion MC1. After replacing the interior of the flask with $N_2$, a heater was fitted and the temperature was raised to 80°C. A mixed solution of 8 g of methyl methacrylate and 0.5 g of N,N'-azobisisovaleronitrile was dripped over one hour, and further, the resulting mixture underwent reaction for 6 hours, whereby Core-shell Type Minute Colored Particles MCC1 were prepared.

(Production Process of Core-Shell Type Minute Colored Particles KCC1)

Transferred to a three-necked flask was 260 g of Minute Core Particle Dispersion KC1. After replacing the interior of the flask with $N_2$, a heater was fitted and the temperature was raised to 80 °C. A mixed solution of 9.4 g of methyl methacrylate and 0.5 g of N,N'-azobisisovaleronitrile was dripped over one hour, and further, the resulting mixture underwent reaction for 6 hours, whereby Core-shell Type Minute Colored Particles KCC1 were prepared.

(Concentration Process of Minute Colored Particles KCC1)

By employing an ultrafiltration membrane apparatus, RUM-2/C10-T (ultrafiltration membrane NTU-3150, produced by Nitto Denko Corp.), 250 g of Core-shell Type Minute Colored Particles KCC1 dispersion was concentrated by a factor of 1.5, whereby concentrated Minute Colored Particles KCC1 was prepared.

[Preparation of Ink Set 34]

Ink Set 34 was prepared which was composed of Magenta Ink M34 and Black Ink K34 which were prepared according to the following procedures.

(Preparation of Magenta Ink M34)

Core-shell Type Minute Colored Particles

| | |
|---|---|
| MCC1 | 40 parts |
| 10% aqueous solution of High Molecular Compound 2 in which the degree of polymerization of the main chain PVA and the modification ratio were changed to 2,000 and 3.8 mol%, respectively | 28 parts |
| Glycerin | 7 parts |
| Diethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total volume to 100 parts, whereby Magenta Ink M34 was prepared.

(Preparation of Black Ink K34)

Black Ink K34 was prepared in the same manner as above Magenta Ink M34, except that Core-shell Type Minute Colored Particles MCC1 was replaced with Core-shell Type Minute Colored Particles KCC1.

(Degassing)

The above ink was degassed employing SEPAREL PF-004D of Dainippon Ink and Chemicals, Inc. as a hollow fiber membrane degassing module.

(Safety of Inks)

Inks in the examples of the present invention resulted in no problem in the aspect of safety with regard to mutagenicity, acute toxicity, and skin sensitization.

«Formation and Evaluation of Ink-Jet Images»

With regard to Ink Sets 1 - 15, 17 - 32, and 34, images were outputted via Image Output Method 1, while with regard to Ink Sets 16 and 33, images were outputted via Image Output method 2.

(Image Output Method 1)

By employing an on-demand type ink-jet printer, being similar to Fig. 1, which was loaded with a piezoelectric type head of a nozzle diameter of 25 μm, a driving frequency of 12 kHz, 128 nozzles, and a nozzle density of 180 dpi (dpi represents the number of dots per inch (2.54 cm)), images were outputted onto each sheet of paper. The maximum recording density was 720 x 720 dpi. Further, 120 W/cm metal halide lamps (MAL 400 NL, at a power source of 3 kW-hour, produced by Japan Storage Battery Co., Ltd.) were arranged at both edges of the head. Each ink was continually discharged and exposed to ultraviolet rays 0.1 second after deposition.

(Image Output Method 2)

By employing thermal system ink-jet printer PSC1610, produced by Hewlett-Packard Co., images were outputted onto each sheet of paper. The printer was partially altered and a spot system UV exposure apparatus (SPOTCURE SP7-250DA, produced by USHIO Inc.) was mounted onto the side of the head. Each ink was continually discharged and exposed to ultraviolet rays 0.1 second after deposition.

(Vibrated Waveform)

In Image Output Method 1, the following control was carried out. When the ink was not discharged, the meniscus of the nozzle which discharged no ink was vibrated so that the ink was not discharged, while when the ink-jet recording head was located at both ends of reciprocating scanning, the ink was discharged from all nozzles and discarded.
In practice, when no ink is discharged, as shown in a) of Fig. 3, pulses of a 4AL width equivalent to 4 times AL of the ink chamber were applied to the electrode of the even number channel at the interval of 12AL, while the same signs were applied to the odd number channel under shifting by 4AL.

(Nozzle Plate Adhesive)

Epoxy resins were employed as an adhesive of the nozzle plate of the piezoelectric type head of the ink-jet printer employed in Image Output Method 1.

(Cleaning Mechanism)

The ink-jet printer employed in Image Output Method 1 was provided with a capping mechanism for head protection during standing-by. Further provided were a sucking mechanism for sucking during nozzle clogging and a wiping mechanism to remove materials attached to the head section. Prior to image output, preliminary discharge was carried out to minimize nozzle clogging.

(Nozzle Failure Detecting Mechanism)

The ink-jet printer employed in Image Output Method 1 was provided with a mechanism (Fig. 1 on pages 2 - 4 of JP-A No. 2002-127478) which judged either ink discharge or non-ink discharge based on the detection results which were obtained in such a manner that electrodes were arranged near each of the ink discharge positions and in the exterior of the printing head, and electric conduction between these two electrodes was detected under synchronization with ink discharge operation.

(Drying Method)

In Image Output Methods 1 and 2, after discharging an ink followed by exposure to UV exposure, drying was carried out employing halogen lamps and air blowers.

(Laminating Treatment)

Output samples were subjected to a laminating treatment employing a commercial polyester based laminate film by a commercial laminator. Storage stability such as surface abrasion resistance was significantly enhanced by the laminating treatment.

(Image storing Method)

Resulting image samples were stored employing commercial clear files and photo-stands, resulting in no problem.

(Evaluation of Feathering Resistance)

A black thin-line at a width of 250 μm and a length of 5 cm was printed onto a high quality paper (Type 6000 for full-color PPC, produced by Ricoh Co., Ltd.) employing Image Output Methods 1 and 2, followed by visual observation, and feathering resistance was evaluated based on the following criteria.

A: The thin line was reproduced without an increase or a decrease of the width due to feathering
B: The line was not broadened due to feathering, but ink feathering along paper fibers was noted in at most 5 positions
C: The line was not broadened due to feathering, but ink feathering along paper fibers was noted in at most 10 positions
D: The line was slightly broadened due to feathering, and ink feathering along paper fibers was noted in at least 10 positions
E: The line was markedly broadened due to feathering, and ink feathering along paper fibers was noted in at least 20 positions

Of the above, D and E are at a level resulting in problems as a commercial product.

(Evaluation of Beading Resistance)

By employing Image Output Methods 1 and 2, a 10 cm x 10 cm solid magenta image was printed onto an art paper (OK KINFUJI+, produced by Oji Paper Co., Ltd.) and a quality paper (TYPE 6000 for full-color PPC paper, produced by Ricoh Co., Ltd.). The resulting prints were visually observed and beading resistance was evaluated based on the following criteria.

A: A uniform image was formed
B: When carefully observed, there were mottled noises in less than 5 positions
C: When carefully observed, there were mottled noises in less than 10 positions
D: There were clear mottled noises in at least 10 positions
E: There were mottled noises in at least 20 positions

Of the above, D and E are at a level resulting in problems as a commercial product.

(Evaluation of Bleeding Resistance)

By employing Image Output Methods 1 and 2, a 100 μm wide black thin-line was printed onto a solid magenta image formed on an art paper (OK KINFUJI+, produced by Oji Paper Co., Ltd.) and a quality paper (TYPE 6000 for full-color PPC paper, produced by Ricoh Co., Ltd.). Thereafter, the resulting print was visually observed and bleeding resistance was evaluated based on the following criteria.

A: The boundary line of the thin line with the solid image was clear
B: Slight bleeding of the boundary line was noted in some positions but the quality was commercially viable
C: Bleeding was noted in the boundary portion, but the quality was within the commercially viable limit
D: Bleeding was clearly noted in the boundary portion, resulting in an increase in the line width by a factor of 1.5, and the quality caused practical problems
E: Quality was such that the boundary of the thin line with the solid image portion was not clear, resulting in very poor bleeding resistance

(Evaluation of Abrasion Resistance)

A 100 μm wide black thin-line was printed onto each of the recording papers in the same manner as the above evaluation of the bleeding resistance. Three minutes later, the resulting thin line image was rubbed back and forth 5 times via fingers, and abrasion resistance as evaluated based on the following criteria.

A: No change of the printed image was noted
B: When observed in detail, abrasions were slightly noted, but the quality was commercially viable
C: Some abrasions were noted, but the quality was within the commercially viable limit
D: The image density was lowered along with formation of abrasions, and the quality resulted in problems for commercial viability
E: The formed black thin-line image was peeled from the recording paper, and the quality was not commercially viable

(Evaluation of Water Resistance)

A 100 μm wide black thin-line was printed onto each of the recording papers in the same manner as the above evaluation of the bleeding resistance. Three minutes later, pure water was dripped, and 15 seconds later, the black thin-line image was rubbed back and for the 5 times via fingers, whereby water resistance was evaluated based on the

following criteria.

A: No change of the printed image was noted
B: When observed in detail, slight abrasions were noted, but the quality was commercially viable
C: Some abrasions were noted, but the quality was within the commercially viable limit
D: The image density was lowered along with formation of abrasions, and the quality resulted in problems for commercial viability
E: The formed black thin-line image was peeled from the recording paper, and the quality was not commercially viable

(Evaluation of Glossiness)

By employing Image Output Methods 1 and 2, a 10 cm x 100 cm solid black image was printed onto an art paper (KINFUJI+, produced by Oji Paper Co., Ltd.). The resulting print was visually observed, and glossiness was evaluated based on the following criteria.

A: Almost no difference in the glossiness between the recorded surface and the substrate was noted, resulting in being natural
B: Slight difference in the glossiness between the recorded surface and the substrate, resulting in a commercially viable level
C: Some difference in the glossiness between the recorded surface and the substrate was visually noted, and the glossiness of the recorded surface was markedly higher than that of the substrate
D: Clear difference in the glossiness between the recorded surface and the substrate was visually noticeable, and the glossiness of the recorded surface was excessively higher than that of the substrate
E: Clear difference in the glossiness between the recorded surface and the substrate was visually noticeable, and the glossiness of the recorded surface was excessively lower than that of the substrate

(Measurement of Density)

By employing Image Output Methods 1 and 2, a 10 cm x 10 cm solid black image was printed onto a quality paper (TYPE 6000 for full-color PPC paper, produced by Ricoh Co., Ltd.). The resulting black density was measured by a reflection densitometer of X-Rite Co., and the resulting density was evaluated based on the following criteria.

A: Black density was at least 1.5
B: Black density was at least 1.4 - less than 1.5
C: Black density was at least 1.2 - less than 1.4
D: Black density was at least 0.8 to less than 1.2
E: black density was less than 0.8

Tables 1 - 8 show the results obtained.

Table 1

| Ink Set | Colorant | Polymer | | | | Ink Set | | | | | |
|---|---|---|---|---|---|---|---|---|---|---|---|
| | | Type | Degree of Polymerization | Modification Ratio mol% | Saponification Ratio mol% | Y | M | C | K | LM | LC |
| 1 | dye | acrylic acid | - | - | - | - | M1 | - | K1 | - | - |
| 2 | dye | RSP | 1700 | 0.9 | 88 | - | M2 | - | K2 | - | - |
| 3 | dye | LVA | 1700 | 1 | 88 | - | M3 | - | K3 | - | - |
| 4 | dye | LVA | 2000 | 3.8 | 88 | - | M4 | - | K4 | - | - |
| 5 | dye | LVA | 2000 | 1.4 | 99 | - | M5 | - | K5 | - | - |

(continued)

| Ink Set | Colorant | Polymer | | | | Ink Set | | | | | |
|---|---|---|---|---|---|---|---|---|---|---|---|
| | | Type | Degree of Polymerization | Modification Ratio mol% | Saponification Ratio mol% | Y | M | C | K | LM | LC |
| 6 | dye | LVA | 2000 | 1.4 | 70 | - | M6 | - | K6 | - | - |
| 7 | dye | LVA | 3500 | 1 | 88 | - | M7 | - | K7 | - | - |
| 8 | dye | LVA | 300 | 4 | 88 | - | M8 | - | K8 | - | - |

Table 2

| Ink Set | Art Paper | | | | | Quality Paper | | | Head | Remarks |
|---|---|---|---|---|---|---|---|---|---|---|
| | Beading Resistance | Bleeding Resistance | Glossiness | Water Resistance | Abrasion Resistance | Bleeding Resistance | Feathering Resistance | Density | | |
| 1 | A | B | A | C | C | A | B | B | *1 | Inv. |
| 2 | B | B | A | B | B | A | B | A | *1 | Inv. |
| 3 | B | B | A | C | B | A | B | A | *1 | Inv. |
| 4 | A | A | A | A | A | A | A | A | *1 | Inv. |
| 5 | A | A | A | A | B | A | A | A | *1 | Inv. |
| 6 | A | B | C | B | B | B | B | A | *1 | Inv. |
| 7 | A | A | A | A | B | A | A | A | *1 | Inv. |
| 8 | B | B | A | C | C | B | B | C | *1 | Inv. |

*1: piezoelectric, Inv.: Present Invention

Table 3

| Ink Set | Colorant | Polymer | | | | Ink Set | | | | | |
|---|---|---|---|---|---|---|---|---|---|---|---|
| | | Type | Degree of Polymerization | Modification Ratio mol% | Saponification Ratio mol% | Y | M | C | K | LN | LC |
| 9 | dye | acrylic cid ester | - | - | - | - | M9 | - | K9 | - | - |
| 10 | dye | none | - | - | 88 | - | M10 | - | K10 | - | - |
| 11 | dye | PVA | 2000 | - | 88 | - | M11 | - | K11 | - | - |
| 12 | dye | urethane based latex | - | - | - | - | M12 | - | K12 | - | - |
| 13 | dye | LVA | 2000 | 3.8 | 88 | Y13 | M13 | C13 | K13 | LM13 | LC13 |
| 14 | dye | LVA | 2000 | 3.8 | 88 | - | M14 | - | K14 | - | - |
| 15 | dye | LVA | 2000 | 3.8 | 88 | - | M15 | - | K15 | - | - |
| 16 | dye | LVA | 2000 | 3.8 | 88 | - | M16 | - | K16 | - | - |

Table 4

| Ink Set | Art Paper | | | | | Quality Paper | | | Head | Remarks |
|---|---|---|---|---|---|---|---|---|---|---|
| | Beading Resistance | Bleeding Resistance | Glossiness | Water Resistance | Abrasion Resistance | Bleeding Resistance | Feathering Resistance | Density | | |
| 9 | A | C | B | E | B | C | D | C | *1 | Comp. |
| 10 | E | E | B | E | C | D | E | E | *1 | Comp. |
| 11 | E | E | B | C | C | D | D | E | *1 | Comp. |
| 12 | E | E | B | B | B | E | E | E | *1 | Comp. |
| 13 | A | A | A | A | A | A | A | A | *1 | Inv. |
| 14 | A | A | A | A | A | A | A | A | *1 | Inv. |
| 15 | A | A | A | A | A | A | A | A | *1 | Inv. |
| 16 | A | A | A | A | A | A | A | A | thermal | Inv. |

*1: piezoelectric, Inv.; Present Invention, Comp.: Comparative Example

Table 5

| Ink Set | Colorant | Polymer | | | | Ink Set | | | | | |
|---|---|---|---|---|---|---|---|---|---|---|---|
| | | Type | Degree of Polymerization | Modification Ratio mol% | Saponification Ratio mol% | Y | M | C | K | LM | LC |
| 17 | pigment | acrylic acid | - | - | - | - | M17 | - | X17 | - | - |
| 18 | pigment | RSP | 1700 | 0.9 | 88 | - | M18 | - | K18 | - | - |
| 19 | pigment | LVA | 1700 | 1 | 88 | - | M19 | - | K19 | - | - |
| 20 | pigment | LVA | 2000 | 3.8 | 88 | - | M20 | - | K20 | - | - |
| 21 | pigment | LVA | 2000 | 1.4 | 99 | - | M21 | - | K21 | - | - |
| 22 | pigment | LVA | 2000 | 1.4 | 70 | - | M22 | - | K22 | - | - |
| 23 | pigment | LVA, | 3500 | 1 | 88 | - | M23 | - | K23 | - | - |
| 24 | pigment | LVA | 300 | 4 | 88 | - | M24 | - | K24 | - | - |

Table 6

| Ink Set | Art Paper | | | | | Quality Paper | | | Head | Remarks |
|---|---|---|---|---|---|---|---|---|---|---|
| | Beading Resistance | Bleeding Resistance | Glossiness | Water Resistance | Abrasion Resistance | Bleeding Resistance | Feathering Resistance | Density | | |
| 17 | A | B | A | B | C | A | B | B | *1 | Inv. |
| 18 | A | B | A | B | B | A | A | A | *1 | Inv. |
| 19 | B | B | A | C | B | A | B | A | *1 | Inv. |
| 20 | A | A | A | A | A | A | A | A | *1 | Inv. |
| 21 | A | A | A | A | B | A | A | A | *1 | Inv. |
| 22 | A | B | C | B | B | B | B | A | *1 | Inv. |
| 23 | A | A | A | A | B | A | A | A | *1 | Inv. |
| 24 | A | B | A | C | C | B | B | C | *1 | Inv. |

*1: piezoelectric, Inv.: Present Invention

Table 7

| Ink Set | Colorant | Polymer | | | | Ink Set | | | | | |
|---|---|---|---|---|---|---|---|---|---|---|---|
| | | Type | Degree of Polymerization | Modification Ratio mol% | Saponification Ratio mol% | Y | M | C | K | LM | LC |
| 25 | dye | acrylic cid ester | - | - | - | - | M25 | - | K25 | - | - |
| 26 | dye | none | - | - | - | - | M26 | - | K26 | - | - |
| 27 | dye | PVA | 2000 | - | 88 | - | M27 | - | K27 | - | - |
| 28 | dye | urethane based latex | - | - | - | - | M28 | - | K28 | - | - |
| 29 | dye | radical UV | - | - | - | - | M29 | - | X29 | - | - |
| 30 | dye | LVA | 2000 | 3.8 | 88 | Y30 | M30 | C30 | K30 | LM30 | LC30 |
| 31 | dye | LVA | 2000 | 3.8 | 88 | - | M31 | - | K31 | - | - |
| 32 | dye | LVA | 2000 | 3.8 | 88 | - | M32 | - | K32 | - | - |
| 33 | dye | LVA | 2000 | 3.8 | 88 | - | M33 | - | K33 | - | - |
| 34 | Colorant containing minute particles | LVA | 2000 | 3.8 | 88 | - | M34 | - | K34 | - | - |

Table 8

| Ink set | Art Paper | | | | | Quality-Paper | | | Head | Remarks |
|---|---|---|---|---|---|---|---|---|---|---|
| | Beading Resistance | Bleeding Resistance | Glossiness | Water Resistance | Abrasion Resistance | Bleeding Resistance | Feathering Resistance | Density | | |
| 25 | A | C | B | D | B | C | C | C | *1 | Comp. |
| 26 | E | E | B | E | E | D | E | E | *1 | Comp. |
| 27 | E | E | B | C | B | D | D | D | *1 | Comp. |
| 28 | E | D | B | B | B | C | D | C | *1 | Comp. |
| 29 | B | B | E | A | B | D | B | D | *1 | Comp. |
| 30 | A | A | A | A | A | A | A | A | *1 | Inv. |
| 31 | A | A | A | A | A | A | A | A | *1 | inv. |
| 32 | A | A | A | A | A | A | A | A | *1 | Inv. |
| 33 | A | A | A | A | A | A | A | A | thermal | Inv. |
| 34 | A | A | A | A | A | A | A | A | *1 | Inv. |

*1: piezoelectric, Inv.: Present Invention, Comp.: Comparative Example

As can clearly be seen from the results in Tables 1 - 8, by employing any of the inks in which colorants were dyes, pigments or minute colorant particles, the ink sets of the present invention formed images which exhibited improved feathering resistance, beading resistance, bleeding resistance, abrasion resistance, and water resistance without depending on the types of recoding media, compared to the comparative examples.
In the above tables, LVA represents cross-linking group-modified PVA (polyvinyl alcohol), and RSP represents the aforesaid compound which is produced by Toyo Gosei Co., Ltd., while radical UV represents ethylene oxide-added 1,6hexanediol acrylate.

## Claims

1. An inkjet ink comprising at least a colorant, water and a polymer having a plurality of side chains on a hydrophilic principal chain, wherein bonding by cross-linking occurs between the side chains by irradiating with actinic energy rays.

2. An ink set comprising two or more inkjet inks, wherein at least one of the inkjet inks is the inkjet ink of claim 1.

3. An inkjet recording method comprising the steps of:

    ejecting the inkjet ink of claim 1 onto a recording medium;
    irradiating the ejected ink on the recording medium with actinic energy rays; and
    drying the ink after irradiation.

4. An inkjet recording method comprising the steps of:

    ejecting the ink of the ink set of claim 2 onto a recording medium;
    irradiating the ejected ink on the recording medium with actinic energy rays; and
    drying the ink after irradiation.

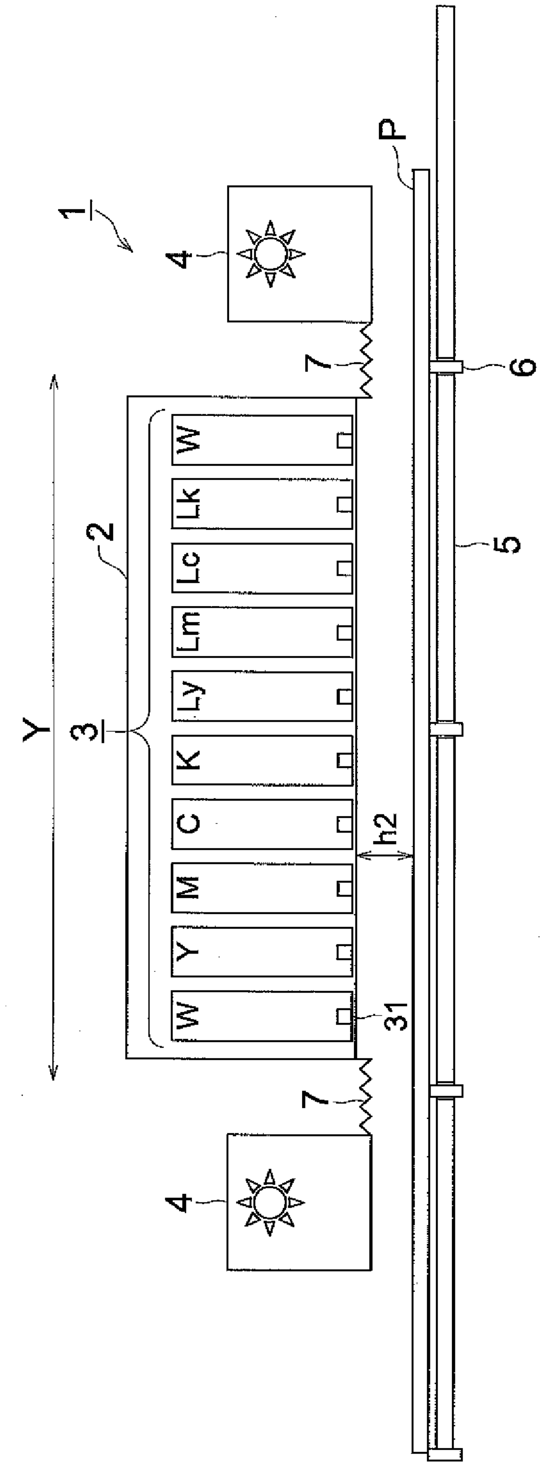


FIG. 1

FIG. 2 (a)

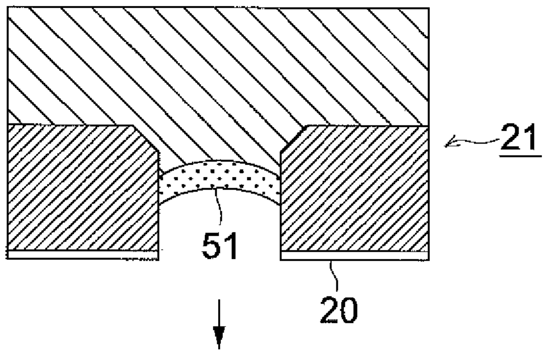


FIG. 2 (b)

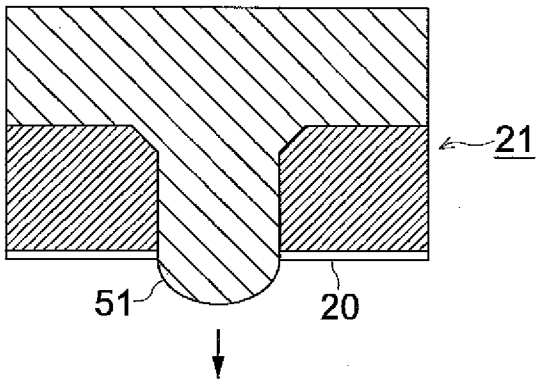


FIG. 2 (c)

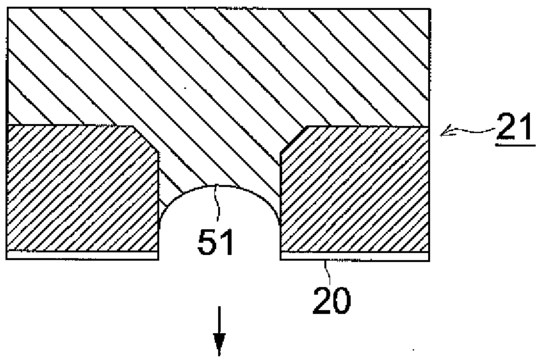


FIG. 2 (d)

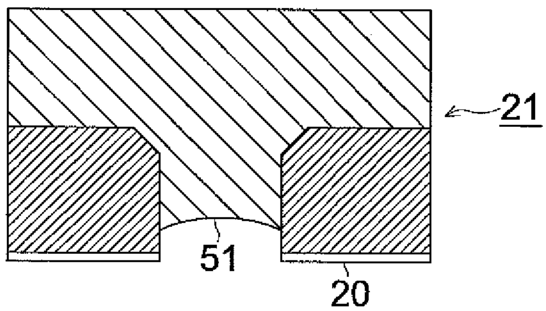

FIG. 3 (a)

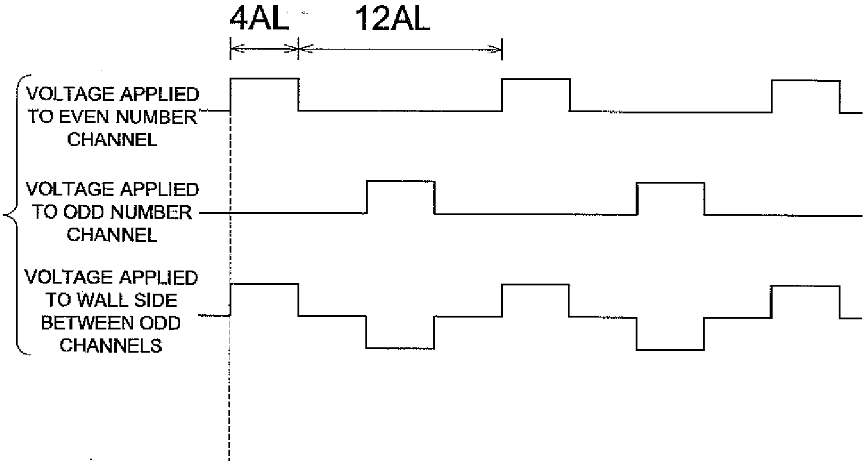


FIG. 3 (b)

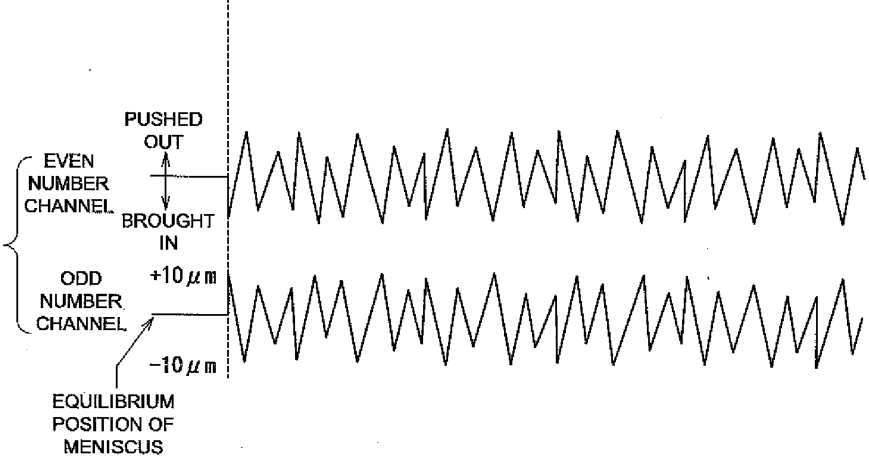


FIG. 4

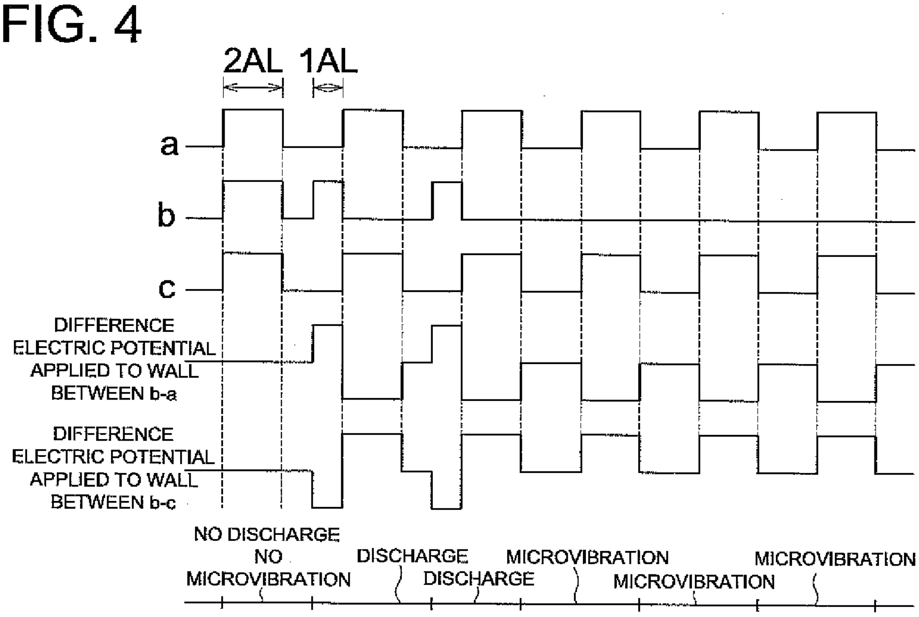

**INTERNATIONAL SEARCH REPORT**

International application No.
PCT/JP2006/309779

A. CLASSIFICATION OF SUBJECT MATTER
*C09D11/00*(2006.01)i, *B41J2/01*(2006.01)i, *B41M5/00*(2006.01)i

According to International Patent Classification (IPC) or to both national classification and IPC

B. FIELDS SEARCHED

Minimum documentation searched (classification system followed by classification symbols)
C09D11/00, B41J2/01, B41M5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-115067 A (Seiko Epson Corp.), 24 April, 2001 (24.04.01), Claims 1, 3; Par. Nos. [0014] to [0016]; examples (Family: none) | 1-4 |
| X | JP 2004-27154 A (Dainippon Ink And Chemicals, Inc.), 29 January, 2004 (29.01.04), Claims 1, 3; Par. Nos. [0017] to [0020]; examples (Family: none) | 1-4 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 August, 2006 (09.08.06) | 15 August, 2006 (15.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4391369 A
- US 4484948 A
- US 4228438 A
- JP 5064667 A
- JP 7224241 A
- JP 60129742 A, Tokkaisho
- JP 56067309 A
- JP 2000181062 A
- JP 2004189841 A
- JP 2004161942 A
- GB 1077484 A
- GB 1039458 A
- GB 1004957 A
- GB 1077628 A
- US 2612448 A
- JP 9048769 A
- JP 10110129 A
- JP 11246807 A
- JP 11057458 A
- JP 11189739 A
- JP 11323232 A
- JP 2000265094 A
- JP 11049974 A, Tokkaihei
- JP 2000273383 A, Tokkai
- JP 2000303014 A, Tokkai
- JP 2002179977 A, Tokkai
- JP 2002201401 A, Tokkai
- JP 11129613 A, Tokkaihei
- JP 11140365 A, Tokkaihei
- JP 2001234093 A, Tokkai
- US 4089800 A
- JP 57074193 A, Tokkaisho
- JP 57087988 A, Tokkaisho
- JP 62261476 A, Tokkaisho
- JP 57074192 A, Tokkaisho
- JP 57087989 A, Tokkaisho
- JP 60072785 A, Tokkaisho
- JP 61146591 A, Tokkaisho
- JP 1095091 A, Tokkaihei
- JP 3013376 A, Tokkaihei
- JP 59042993 A, Tokkaisho
- JP 59052689 A, Tokkaisho
- JP 62280069 A, Tokkaisho
- JP 61242871 A, Tokkaisho
- JP 4219266 A, Takkaihei
- JP 2001081379 A, Tokkai
- JP 61154989 A
- JP 61177279 A
- JP 1115677 A
- JP 1036479 A
- JP 1036480 A
- JP 7195824 A
- JP 8150773 A
- JP 7149037 A
- JP 7314882 A, Tokkaihei
- JP 7314883 A, Tokkaihei
- JP 7276790 A
- JP 8108617 A, Tokkaihei
- JP 8118791 A, Tokkaihei
- JP 8300807 A, Tokkaihei
- JP 9267544 A, Tokkaihei
- JP 2000263928 A, Tokkai
- JP 61061164 A, Tokkaisho
- JP 60132767 A, Tokkaisho
- US 6145979 A
- JP 2000318178 A
- JP 2001146022 A
- JP 2002127478 A


### Non-patent literature cited in the description


- Polymer Handbook. John Wiley & Sons, Inc, 675
- **YOSHIO KODA.** Organic Conceptual Diagram. Sankyo Shuppan, 1985